# EUROPÄISCHE PATENTSCHRIFT

(11) **EP 4 343 634 B1**
(45) Veröffentlichungstag und Bekanntmachung des Hinweises auf die Patenterteilung: **24.12.2025**
(21) Anmeldenummer: 22197087.4
(22) Anmeldetag: 22.09.2022
(51) Int. Cl.: G06N 3/082, G06N 3/063, G06N 3/09, G06N 3/086, G06N 3/067, G06N 3/084

(54) **VORRICHTUNG, ANORDNUNG UND SYSTEM ZUM BETREIBEN EINES HARDWARE-BASIERTEN KÜNSTLICHEN NEURONALEN NETZWERKS SOWIE VERFAHREN ZUM TRAINIEREN DERSELBEN**
DEVICE, ARRANGEMENT AND SYSTEM FOR OPERATING A HARDWARE-BASED ARTIFICIAL NEURAL NETWORK AND METHOD FOR TRAINING THE SAME
DISPOSITIF, ENSEMBLE ET SYSTÈME POUR FAIRE FONCTIONNER UN RÉSEAU NEURONAL ARTIFICIEL BASÉ SUR UN MATÉRIEL ET PROCÉDÉ POUR L'APPRENTISSAGE DE CELUI-CI

(43) Veröffentlichungstag der Anmeldung: 27.03.2024
(73) Patentinhaber: Fraunhofer-Gesellschaft zur Förderung der angewandten Forschung e.V., 80686 München (DE)
(72) Erfinder: ZIMMERMANN, Heiko, 66280 Sulzbach (DE); FUHR, Günter, 66280 Sulzbach (DE)
(74) Vertreter: Schiweck Weinzierl Koch Patentanwälte Partnerschaft mbB

(56) Entgegenhaltungen:
- CHERUPALLY SAI KIRAN ET AL: "Improving DNN Hardware Accuracy by In-Memory Computing Noise Injection", IEEE DESIGN&TEST, IEEE, PISCATAWAY, NJ, USA, vol. 39, no. 4, 27 December 2021 (2021-12-27), pages 71 - 80, XP011912295, ISSN: 2168-2356, [retrieved on 20211227], DOI: 10.1109/MDAT.2021.3139047

## Beschreibung

Die Erfindung betrifft eine Vorrichtung, eine Anordnung und ein System zum Betreiben eines hardware-basierten künstlichen neuronalen Netzwerks sowie ein Verfahren zum Trainieren derselben.

Künstliche Intelligenz kann zur Erkennung von Mustern in technischen Anwendungen eingesetzt werden, z. B. bei der Bilderkennung oder bei der Überwachung von Maschinenparametern. Künstliche neuronale Netzwerke, die die Funktion biologischer Neuronen imitieren, können eine künstliche Intelligenz bereitstellen. Diese künstlichen neuronalen Netzwerke können mit Trainingsdaten evolutiv trainiert werden, wobei das Training die künstlichen neuronalen Netzwerke derart anpasst, dass sie ihre Fähigkeit zur Erfüllung ihrer Aufgaben verbessern. Dabei werden die einzelnen Elemente des künstlichen neuronalen Netzwerks bei jedem Trainingsdurchlauf neu verknüpft.

Prinzipiell können derartige Systeme als hardware-basiertes System oder als software-basiertes System umgesetzt werden. Bei hardware-basierten Systemen werden veränderbare elektronische Elemente miteinander zu einem künstlichen neuronalen Netzwerk verknüpft. Dabei können Dutzende von verknüpften Elementen entfernt werden, ohne dass das System seine Leistungsfähigkeit verliert. Weiter können in hardware-basierten künstlichen neuronalen Netzwerke nicht mit dem restlichen Netzwerk verknüpfte, d. h. nicht eingebundene und nicht genutzte Elemente vorhanden sein, die nicht entfernt werden können, ohne die Leistungsfähigkeit des hardware-basierten künstlichen neuronalen Netzwerks zu verringern bzw. zu verlieren.

Um diesen Effekt zu reduzieren, ist z. B. aus Cramer, B., Stöckel, D., Kreft, M., Wibral, M., Schemmel, J., Meier, K., & Priesemann, V. Control of criticality and computation in spiking neuromorphic networks with plasticity, Nature Communications, 11(1) (2020) 2853, bekannt, ein möglichst großes Signal-zu-Rausch-Verhältnis zwischen den verknüpften Elementen implementiert, da dies erlaubt, die Zahl der Teil-Komponenten in die Tausende und die Zahl der evolutiv verknüpfbaren Verbindungen in die Zehntausende zu bringen.

Aus CHERUPALLY SAI KIRAN ET AL: "Improving DNN Hardware Accuracy by In-Memory Computing Noise Injection", IEEE DESIGNGTEST, IEEE, PISCATAWAY, NJ, USA, Bd. 39, Nr. 4, 27. Dezember 2021 (2021-12-27), Seiten 71-80, ist eine Vorrichtung bekannt, bei der ein künstliches neuronales Netzwerk auf einem In-Memory-Chip trainiert wird. Dabei wird während eines Trainings des Netzwerks ein Rauschen von anderen Bauteil-Komponenten in den In-Memory-Chip eingekoppelt, wobei eine Teilsummierungs-Ebene durch das Rauschen beeinflusst wird.

Gegenüber software-basierten künstlichen neuronalen Netzwerken weisen die hardware-basierten künstlichen neuronalen Netzwerke momentan eine deutlich eingeschränktere Zahl der Elemente und Verbindungen, eine geringere Trainierbarkeit sowie eine niedrigere Komplexität und Flexibilität auf.

Aufgabe der Erfindung ist es daher, ein verbessertes hardware-basiertes künstliches neuronales Netzwerk bereitzustellen, bei dem die genannten Nachteile behoben werden.

Die Aufgabe wird gelöst durch die Merkmale der unabhängigen Ansprüche. Vorteilhafte Weiterbildungen sind Gegenstand der abhängigen Ansprüche sowie der folgenden Beschreibung.

Gemäß einem ersten Aspekt betrifft die Erfindung eine Vorrichtung zum Betreiben eines hardware-basierten künstlichen neuronalen Netzwerks, umfassend mindestens ein hardware-basiertes künstliches neuronales Netzwerk, wobei erfindungsgemäß vorgesehen ist, dass die Vorrichtung mindestens eine Störeinrichtung zum Einkoppeln mindestens eines Störsignals in mindestens einem Bereich des hardware-basierten künstlichen neuronalen Netzwerks und mindestens eine Koppeleinrichtung aufweist, wobei die Koppeleinrichtung zwischen der Störeinrichtung und dem hardware-basierten künstlichen neuronalen Netzwerk angeordnet ist und zum Übertragen des mindestens einen Störsignals von der Störeinrichtung in den gesamten mindestens einen Bereich ausgebildet ist.

Unter einem hardware-basierten künstlichen neuronalen Netzwerk werden an biologische neuronale Netzwerke angelehnte Netzwerke, bei denen die Knoten in der Regel vergleichbare Eigenschaften (Gewicht, Übertragungsfunktion usw.) haben und die in Schichten angeordnet sind, elektronische Schaltungen verstanden, bei denen die Knoten des Netzwerks im Gegensatz zu biologisch angelehnten neuronalen Netzwerken verschiedene digitale und/oder analoge Schaltungselemente aufweisen. Diese können auch nicht in Form von Schichten wie bei biologisch angelehnten Netzwerken, sondern stattdessen als elektronische Schaltung stochastisch verbunden werden, so dass bei einem Teil der Schaltungselemente z. B. als Ausgang vorgesehene Anschlüsse als Eingang verwendet werden können und umgekehrt. Dadurch können aus Sicht der gängigen Elektronik "sinnlose" Gesamtschaltungen entstehen, die durch das Training ihre "Intelligenz" erhalten. Hardware-basierte künstliche neuronale Netzwerke können daher auch als trainierbare elektronische Netzwerke bezeichnet werden.

Mit der Erfindung wird eine Vorrichtung zum Betreiben eines hardware-basierten künstlichen neuronalen Netzwerks bereitgestellt, bei der ein Störsignal in mindestens einen Bereich des hardware-basierten künstlichen neuronalen Netzwerks eingekoppelt wird. Dabei wird das Störsignal in den gesamten Bereich eingekoppelt, d. h. das Störsignal ist in dem gesamten Bereich vorhanden bzw. der Bereich entspricht den von dem Störsignal abgedeckten Regionen des hardware-basierten künstlichen neuronalen Netzwerks. Der mindestens eine Bereich kann kleiner sein als das gesamte hardware-basierte künstliche neuronale Netzwerk. Weiter weist die Vorrichtung eine Störeinrichtung auf, die ein Störsignal in ein hardware-basiertes künstliches neuronales Netzwerk einkoppeln kann. Zum Einkoppeln des Störsignals ist eine Koppeleinrichtung zwischen der Störeinrichtung und dem hardware-basierten künstlichen neuronalen Netzwerk vorgesehen. Die Koppeleinrichtung kann in einem Beispiel lediglich einen luftgefüllten Raum zwischen der Störeinrichtung und dem hardware-basierten künstlichen neuronalen Netzwerk aufweisen. Das von der Störeinrichtung emittierte Störsignal wird durch die Koppeleinrichtung zu dem mindestens einen Bereich geleitet und dort eingekoppelt. Die Einkopplung des Störsignals bewirkt eine Erhöhung des Rauschens in dem mindestens einen Bereich, so dass das Signal-zu-Rausch-Verhältnis bei der Übertragung von Signalen zwischen den Elementen, z. B. Knotenpunkten, des hardware-basierten künstlichen neuronalen Netzwerks reduziert wird. Entgegen allen Bestrebungen bei der Umsetzung elektronischer Schaltungen wird damit in kontraintuitiver Weise anstatt einer Erhöhung des Signal-zu-Rausch-Verhältnisses in dem mindestens einen Bereich des hardware-basierten künstlichen neuronalen Netzwerks eine räumliche und/oder zeitliche und/oder partielle Verringerung des Signal-zu-Rausch-Verhältnisses durchgeführt. Diese Verringerung ist auf den mindestens einen Bereich beschränkt, in dem das Störsignal eingekoppelt wird, d. h. es ist auf einige elektronische Komponenten der Schaltung des hardware-basierten künstlichen neuronalen Netzwerks begrenzt. Das Signal-zu-Rausch-Verhältnis (S/N) ist definiert durch: S/N = 10*lg(Nutzleistung/Rauschleistung), angegeben in Dezibel (dB), bzw. S/N = 20*log(Nutzsignalspannung/Rauschsignalspannung). Gut übertragbare Signale besitzen ein S/N von größer als 15 dB, ein S/N von kleiner als 10 dB gilt als stark verrauscht. Ist die Nutzsignalleistung gleich der Rauschsignalleistung ist das Signal beim Empfänger nicht mehr identifizierbar. Überraschenderweise wird die Leistungsfähigkeit des hardware-basierten künstlichen neuronalen Netzwerks, das mit eingekoppelten Störsignalen trainiert wird, verbessert. Da das Training mit den eingekoppelten Störsignalen erfolgt, wird auch der normale Betrieb des hardware-basierten künstlichen neuronalen Netzwerks mit der Einkopplung der Störsignale durchgeführt. Unter der Erhöhung der Leistungsfähigkeit wird u. a. verstanden, dass die Erkennung von Mustern, z. B. Bildern oder Sprache, mit einer erhöhten Wahrscheinlichkeit korrekt ausgeführt wird, ohne die Anzahl der Knoten im Netzwerk zu erhöhen. Damit wird ein verbessertes hardware-basiertes künstliches neuronales Netzwerk bereitgestellt, bei dem die oben genannten Nachteile des Stands der Technik behoben werden.

Gemäß einem Beispiel kann das hardware-basierte künstliche neuronale Netzwerk in dem mindestens einen Bereich mindestens ein Bauteil aufweisen, das bei Empfang des mindestens einen Störsignals zum Reduzieren des Signal-zu-Rausch-Verhältnisses ausgebildet ist, wobei die Störeinrichtung vorzugsweise ein optisches, akustisches, kapazitives, elektromagnetisches, quantenmechanisches, ohmsches, thermisches und/oder ionisierendes Störsignal erzeugt.

Die Reduzierung des Signal-zu-Rausch-Verhältnisses erfolgt über eine Erhöhung des Rauschens in dem Bauteil. Dazu kann das Bauteil empfindlich auf das Störsignal ausgebildet sein. So kann z. B. bei Verwendung eines optischen Störsignals, das Rauschen in dem Bauteil bei der Übertragung von elektrischen Signalen in dem Bauteil erhöht werden.

Gemäß der Erfindung weist die Störeinrichtung eine Vielzahl von einzeln ansteuerbaren Störelementen zum Einkoppeln eines Störsignals in das hardware-basierte neuronale Netzwerk auf, wobei die Störelemente ein Störsignal in unterschiedliche Bereiche des hardware-basierten künstlichen neuronalen Netzwerks einkoppeln.

Damit können mehrere Bereiche des hardware-basierten künstlichen neuronalen Netzwerks, vorzugsweise das gesamte hardware-basierte künstliche neuronale Netzwerk, von Störsignalen beeinflusst werden. Da die Störelemente unabhängig voneinander angesteuert werden können, kann jeder Bereich in dem hardware-basierten künstlichen neuronalen Netzwerk individuell mit einen eigenen Störsignal beaufschlagt werden. Die Bereiche können sich überschneiden und/oder getrennt voneinander sein.

Weiter kann beispielsweise die Vielzahl der Störelemente auf einer Ebene verteilt, vorzugsweise arrayartig, angeordnet sein, wobei die Koppeleinrichtung ein Medium mit einer Vielzahl von Koppelelementen zum Übertragen des mindestens einen Störsignals in den mindestens einen Bereich aufweist, wobei die Koppelelemente wie die Störelemente in der Ebene verteilt sind.

Damit kann mit den Störelementen ein Störsignal-Muster erzeugt werden, das über die Koppeleinrichtung mit dem Koppelelementen entsprechend auf das hardware-basierte künstliche neuronale Netzwerk übertragen wird. Da die Verteilung der Störelemente in der Ebene bekannt ist, können gezielt Bereiche in dem hardware-basierten künstlichen neuronalen Netzwerk mit Störsignalen beaufschlagt werden. Insbesondere kann die Verteilung der Störelemente in der Ebene derart ausgebildet sein, dass die Störelemente analog zu den Bauteilen des neuronalen Netzwerks angeordnet sind. Damit können dann gezielt Störsignale in einzelnen Bauteilen eingekoppelt werden.

Weiter kann zumindest ein Teil der Vielzahl der Störelemente als Widerstandsheizung, Peltier-Element, Licht emittierende Diode, elektromagnetischer Strahler und/oder Sender, und/oder Piezo-Bauteil ausgebildet sein.

In einem weiteren Beispiel kann der mindestens eine Bereich eine Ausdehnung aufweisen, die der Größe des hardware-basierten künstlichen neuronalen Netzwerks entspricht, oder kleiner als die Größe des hardware-basierten künstlichen neuronalen Netzwerks ausgebildet ist.

Wenn der mindestens eine Bereich, die gleiche Ausdehnung wie das hardware-basierte künstliche neuronale Netzwerk aufweist, kann die Störeinrichtung bzw. die Koppeleinrichtung homogen ausgebildet werden, um das gesamte hardware-basierte künstliche neuronale Netzwerk homogen mit einem Störsignal zu beaufschlagen. Durch einen feineren Strukturierungsgrad können die Störsignale an verschiedene Bereichen in einem Bauteil eingekoppelt werden, z. B. lediglich an einem Signaleingang oder einem Signalausgang eines Schaltungselements des hardware-basierten künstlichen neuronalen Netzwerks. Wenn die Ausdehnung des mindestens einen Bereiches z. B. gleich der Ausdehnung eines Bauteils des hardware-basierten künstlichen neuronalen Netzwerks ist und jedem Bauteil ein Bereich zugeordnet ist, kann in jedes Bauteil des neuronalen Netzwerks ein unabhängiges Störsignal eingekoppelt werden.

Die Vielzahl der Koppelelemente kann damit eine Strukturierung aufweisen, die gleich der Strukturierung der Vielzahl der Störelemente ist. Weiter kann die Struktur der Koppelelemente auch der Struktur des hardware-basierten künstlichen neuronalen Netzwerks entsprechen. Es sei damit jedoch nicht ausgeschlossen, dass die Strukturierung der Koppelelemente feiner oder gröber als der die Strukturierung der Störelemente oder des hardware-basierten künstlichen neuronalen Netzwerks sein kann.

Gemäß einem weiteren Beispiel kann die Vorrichtung mindestens einen Halbleiterchip aufweisen, wobei der Halbleiterchip das hardware-basierte künstliche neuronale Netzwerk aufweist, wobei das hardware-basierte künstliche neuronale Netzwerk vorzugsweise in einem integrierten Schaltkreis, weiter vorzugsweise in einem Field Programable Gate Array (FPGA) oder in einer anwendungsspezifischen integrierten Schaltung (ASIC), ausgebildet ist.

Das neuronale Netzwerk kann als Schaltkreis auf dem Halbleiterchip ausgebildet sein, wobei die Knotenpunkte des neuronalen Netzwerks als Bauteile des Schaltkreises ausgebildet sein können. Im Beispiel, dass die Elemente des neuronalen Netzwerks als Bauteile eines Field Programable Gate Arrays ausgebildet sind, d. h., dass das Field Programable Gate Array derart konfiguriert sein kann, dass die Schaltungsstruktur der Elemente des Field Programable Gate Array ein neuronales Netzwerk bildet. Ein hardware-basiertes künstliches neuronales Netzwerk, dass auch einem Field Programable Gate Array realisiert ist, kann weiter trainiert werden. Im Gegensatz dazu ist ein hardware-basiertes künstliches neuronales Netzwerk auf einer anwendungsspezifischen integrierten Schaltung fest verdrahtet und muss vorher in anderer Weise optimiert worden sein.

Weiter ist denkbar, dass die Vorrichtung eine Abschirmeinrichtung zum Abschirmen von äußeren Störsignalen, die von der gleichen Art des mindestens einen Störsignals sind, aufweisen kann, wobei die Abschirmeinrichtung das hardware-basierte künstliche neuronale Netzwerk, die Koppeleinrichtung und die Störeinrichtung umgibt.

Die Abschirmeinrichtung kann z. B. als Kapselung ausgebildet sein, die eine äußere Hülle der Vorrichtung bildet. Die Störeinrichtung, die Koppeleinrichtung und das hardware-basierte künstliche neuronale Netzwerk sind daher von der Abschirmeinrichtung umgeben. Die Abschirmeinrichtung kann äußere Störsignale abschirmen, die das Signal-zu-Rausch-Verhältnis unkontrolliert und nicht reproduzierbar verändern können. Damit bewirken die Störsignale der Störeinrichtung nahezu ausschließlich die Veränderung des Signal-zu-Rausch-Verhältnisses in den Bereichen des neuronalen Netzwerks.

In einem zweiten Aspekt betrifft die Erfindung eine Anordnung einer Vielzahl von Vorrichtungen nach der vorangegangenen Beschreibung, wobei die hardware-basierten künstlichen neuronalen Netzwerke der Vorrichtungen miteinander seriell und/oder parallel elektrisch verbunden sind, wobei vorzugsweise die Störeinrichtungen von zumindest einer ersten Vorrichtung der Vielzahl von Vorrichtungen und einer zweiten Vorrichtung der Vielzahl von Vorrichtungen als eine gemeinsame Störeinrichtung ausgebildet sind, wobei weiter vorzugsweise eine Ausgangsebene des hardware-basierten künstlichen neuronalen Netzwerks einer dritten Vorrichtung der Vielzahl von Vorrichtungen zum Steuern der Störeinrichtung einer vierten Vorrichtung der Vielzahl von Vorrichtungen ausgebildet ist.

Vorteile und Wirkungen sowie Weiterbildungen der Anordnung ergeben sich aus den Vorteilen und Wirkungen sowie Weiterbildungen der oben beschriebenen Vorrichtung. Zur Vermeidung von Wiederholungen wird daher in dieser Hinsicht auf die vorangegangene Beschreibung verwiesen.

Die Anordnung weist mindestens zwei Vorrichtung gemäß der vorangegangenen Beschreibung auf. In der Anordnung ist die Ausgangsebene eines hardware-basierten künstlichen neuronalen Netzwerks einer ersten Vorrichtung u. a. mit einem Eingang einer Störeinrichtung einer zweiten Vorrichtung oder mehrerer anderer Vorrichtungen elektrisch verbunden sein. Die erste Vorrichtung kann dann die Störeinrichtung der zweiten Vorrichtung steuern bzw. deren Funktion beeinflussen. Auf diese Weise können alle Vorrichtungen über eine elektrische Verbindung ihrer neuronalen Netzwerke mit den Störeinrichtungen anderer Vorrichtungen der Anordnung gekoppelt sein.

Weiter betrifft die Erfindung in einem dritten Aspekt ein System umfassend eine Vielzahl von Anordnungen nach der vorangegangenen Beschreibung, wobei eine erste Anordnung der Vielzahl von Anordnungen zum Steuern mindestens einer Störeinrichtung in einer zweiten Anordnung der Vielzahl von Anordnungen ausgebildet ist.

Vorteile und Wirkungen sowie Weiterbildungen des Systems ergeben sich aus den Vorteilen und Wirkungen sowie Weiterbildungen der oben beschriebenen Vorrichtung und der Anordnung. Zur Vermeidung von Wiederholungen wird daher in dieser Hinsicht auf die vorangegangene Beschreibung verwiesen.

Die erste Anordnung kann z. B. eine Basisebene bilden, deren Vorrichtungen ein Ausgangssignal abgeben, das von den Vorrichtungen der zweiten Anordnung, z. B. nach einer weiteren Verarbeitung, als Eingangssignal verarbeitet wird. Dabei kann zumindest eine Störeinrichtung einer Vorrichtung der zweiten Anordnung mit der Ausgangsebene mindestens einer Vorrichtung der ersten Anordnung gekoppelt sein. Dies kann als eine Vorwärtskopplung bezeichnet werden. Weiter ist denkbar, dass zumindest eine Störeinrichtung einer Vorrichtung der ersten Anordnung mit der Ausgangsebene mindestens einer Vorrichtung der zweiten Anordnung gekoppelt sein kann. Dies kann als Rückwärtskopplung bezeichnet werden.

Weiter können mehrere Systeme als Sub-Systeme angesehen werden und in einem komplexen System zusammenfasst werden, wobei die Sub-Systeme in oben beschriebener Weise miteinander gekoppelt werden. So kann ein komplexeres System mit einer weiter erhöhten Leistungsfähigkeit gebildet werden. Ein derartiges komplexes System z. B. Signale verschiedener Art (optisch und akustisch) verarbeiten, wobei jeweils ein Sub-System die optischen Signale verarbeitet und ein andere Sub-System die akustischen Signale.

In einem vierten Aspekt betrifft die Erfindung ein Verfahren zum Trainieren eines künstlichen neuronalen Netzwerks in einer Vorrichtung nach der vorangegangenen Beschreibung, wobei das Verfahren zumindest folgende Schritte aufweist: Definieren von Soll-Ausgabedaten bei der Verarbeitung von bereitgestellten Trainingsdaten; Einspeisen der Trainingsdaten in das hardware-basierte künstliche neuronale Netzwerk und Einkoppeln mindestens eines Störsignals in den mindestens einen Bereich des hardware-basierten künstlichen neuronalen Netzwerks mittels der mindestens einen Störeinrichtung; Ermitteln von Ausgabedaten des hardware-basierten künstlichen neuronalen Netzwerks; Ermitteln, ob mindestens eine Abweichung zwischen den Ausgabedaten mit den Soll-Ausgabedaten besteht, die außerhalb eines vorbestimmten Toleranzbereiches angeordnet ist; wenn die Abweichung innerhalb des Toleranzbereichs angeordnet ist: Beenden des Verfahrens; und wenn die Abweichung außerhalb des vorbestimmten Toleranzbereichs angeordnet ist: Ändern des hardware-basierten künstlichen neuronalen Netzwerks und vorzugsweise Ändern des mindestens einen Störsignals und Wiederholen der vorgenannten Schritte.

Vorteile und Wirkungen sowie Weiterbildungen des Verfahrens ergeben sich aus den Vorteilen und Wirkungen sowie Weiterbildungen der oben beschriebenen Vorrichtung. Zur Vermeidung von Wiederholungen wird daher in dieser Hinsicht auf die vorangegangene Beschreibung verwiesen.

Mit dem Verfahren wird ein hardware-basiertes künstliches neuronales Netzwerk in einem durch die Störeinrichtung gestörten Zustand trainiert. Das Training des neuronalen Netzwerks erfolgt damit mit einer Störung der Signalübertragung in dem mindestens einen Bereich, in dem ein Störsignal eingekoppelt wird. Bei jedem Trainingsdurchlauf wird zusätzlich zu den Änderungen, die am hardware-basierten künstlichen neuronalen Netzwerk durchgeführt werden, auch Änderungen dem mindestens einen eingekoppelten Störsignal durchgeführt. Dazu kann zumindest ein Parameter des mindesten einen Störsignals, z. B. eine Intensität, eine Frequenz, eine Zeitdauer usw., geändert werden. Durch die Änderung des mindestens einen Parameters wird auch das mindestens eine Störsignal geändert. Mit dem Verfahren kann damit eine Störeinrichtung in das Training eines neuronalen Netzwerks einbezogen werden. Dadurch kann mit dem Verfahren ein trainiertes hardware-basiertes künstliches neuronales Netzwerk bereitgestellt werden, dass eine erhöhte Leistungsfähigkeit als ein neuronales Netzwerk aufweist, in das keine Störsignale eingekoppelt werden.

Gemäß einem Beispiel kann mittels des eingekoppelten Störsignals in dem mindestens einen Bereich ein Signal-zu-Rauschverhältnis von höchstens 15 dB, vorzugsweise höchstens 10 dB, weiter vorzugsweise höchstens 0 dB erzeugt werden.

In der Regel gilt, dass gut übertragbare Signale ein Signal-zu-Rausch-Verhältnis von mehr als 15 dB aufweisen. Ein Signal-zu-Rausch-Verhältnis von weniger als 10 dB gilt als stark verrauscht. Ist die Nutzsignalleistung gleich der Rauschsignalleistung ist das Signal beim Empfänger nicht mehr identifizierbar. Dennoch kann ein neuronales Netzwerk prinzipiell auch bei einem Signal-zu-Rausch-Verhältnis von 0 dB oder weniger Muster in dem Rauschen erkennen, so dass auch bei einen nicht mehr identifizierbaren Signal eine Beeinflussung der Ausgabe der nachfolgenden Knoten des neuronalen Netzwerks erfolgen kann. Das Signal-zu-Rausch-Verhältnis kann weiter auch weniger als 0 dB betragen, vorzugsweise minimal -40 dB, weiter vorzugsweise -15 dB, weiter vorzugsweise -10 dB.

Weiter ist denkbar, dass vor dem Schritt: Definieren von Soll-Ausgabedaten bei der Verarbeitung von bereitgestellten Trainingsdaten, das hardware-basierte künstliche neuronale Netzwerk beispielsweise ohne Einkopplung von Störsignalen trainiert werden kann.

Damit kann das neuronale Netzwerk zunächst, wie aus dem Stand der Technik bekannt, trainiert werden, um zunächst eine erste Leistungsfähigkeit zu erreichen, z. B. einen ersten Genauigkeitswert für das Erkennen bestimmter Muster. Durch das nachfolgende weitere Training mit der Einkopplung von Störsignalen, kann die erste Leistungsfähigkeit übertroffen werden, wobei z. B. ein zweiter Genauigkeitswert für das Erkennen der bestimmten Muster erzielt wird, der größer als der erste Genauigkeitswert ist.

Gemäß der Erfindung kann die mindestens eine Störeinrichtung zumindest eine Vielzahl von einzeln ansteuerbaren Störelementen aufweisen, wobei jedes Störelement zum Einkoppeln eines Störsignals in das hardware-basierte neuronale Netzwerk ausgebildet ist, wobei vorzugsweise jedes Störelement ein Störsignal in einen anderen Bereich des hardware-basierten künstlichen neuronalen Netzwerks einkoppelt, und die Vielzahl der ansteuerbaren Störelemente können dabei derart angesteuert werden, dass die Störsignale über das hardware-basierte künstliche neuronale Netzwerk ein vordefiniertes Störsignal-Muster bilden, wobei nacheinander mehrere Trainings des hardware-basierten künstlichen neuronalen Netzwerks mit verschiedenen vordefinierten Störsignal-Mustern durchgeführt werden.

Das vordefinierten Störsignal-Muster kann z. B. für einen ersten Trainingsdurchlauf verwendet werden. In nachfolgenden Trainingsdurchläufen kann das Störsignal-Muster verändert werden, indem die Aktivität einzelner oder mehrerer der einzeln ansteuerbaren Störelemente verändert wird, z. B. durch eine Reduktion bzw. Erhöhung der Signalstärke. Dadurch, dass initial ein vordefiniertes Störsignal-Muster eingekoppelt werden kann, kann das Training durch die Verwendung bereits als passend eingestufter Störsignal-Muster beschleunigt werden. Weiter kann das vordefinierte Störsignal-Muster auch unverändert über das gesamte Training verwendet werden.

Gemäß einem fünften Aspekt betrifft die Erfindung ein Verfahren zum Trainieren von künstlichen neuronalen Netzwerken in einer Anordnung nach der vorangegangenen Beschreibung, wobei das Verfahren zum Trainieren eines künstlichen neuronalen Netzwerks in einer Vorrichtung gemäß der vorangegangenen Beschreibung auf die hardware-basierten künstlichen neuronalen Netzwerke der Vorrichtungen angewendet wird, vorzugsweise nachdem die Vorrichtungen außerhalb der Anordnung mittels des Verfahrens zum Trainieren eines künstlichen neuronalen Netzwerks in einer Vorrichtung gemäß der vorangegangenen Beschreibung separat trainiert wurden.

Vorteile und Wirkungen sowie Weiterbildungen des Verfahrens zum Trainieren von künstlichen neuronalen Netzwerken in einer Anordnung ergeben sich aus den Vorteilen und Wirkungen sowie Weiterbildungen der oben beschriebenen Vorrichtung, der Anordnung und dem weiteren vorbeschriebenen Verfahren. Zur Vermeidung von Wiederholungen wird daher in dieser Hinsicht auf die vorangegangene Beschreibung verwiesen.

Mit dem Verfahren zum Trainieren von künstlichen neuronalen Netzwerken in einer Anordnung können alle Vorrichtungen der Anordnung durch das Training aufeinander abgestimmt werden, um die Leistungsfähigkeit der Anordnung zu verbessern. Dazu können die Vorrichtungen der Anordnung von vorneherein zusammen trainiert werden. Alternativ können die Vorrichtungen zunächst jede für sich trainiert werden, wobei dann keine Beeinflussung der entsprechenden Störsignaleinrichtung durch die Ausgangssignale einer anderen Vorrichtung erfolgt. Erst in einem zweiten Training, in dem die Vorrichtungen der Anordnung aufeinander abgestimmt werden, können die Störeinrichtungen durch die Ausgangssignale anderer Vorrichtungen der Anordnung beeinflusst werden.

In einem sechsten Aspekt betrifft die Erfindung ein Verfahren zum Trainieren von künstlichen neuronalen Netzwerken in einem System nach der vorangegangenen Beschreibung, wobei das Verfahren zum Trainieren eines künstlichen neuronalen Netzwerks in einer Vorrichtung nach gemäß der vorangegangenen Beschreibung auf die hardware-basierten künstlichen neuronalen Netzwerke der Vorrichtungen angewendet wird, vorzugsweise nachdem die Anordnungen außerhalb des Systems mittels des Verfahrens zum Trainieren von künstlichen neuronalen Netzwerken in einer Anordnung gemäß der vorangegangenen Beschreibung separat trainiert wurden.

Vorteile und Wirkungen sowie Weiterbildungen des Verfahrens zum Trainieren von künstlichen neuronalen Netzwerken in einem System ergeben sich aus den Vorteilen und Wirkungen sowie Weiterbildungen der oben beschriebenen Vorrichtung, der Anordnung, des Systems und der weiteren vorbeschriebenen Verfahren. Zur Vermeidung von Wiederholungen wird daher in dieser Hinsicht auf die vorangegangene Beschreibung verwiesen.

Bei dem Verfahren zum Trainieren von künstlichen neuronalen Netzwerken in einem System, werden die verschiedenen Anordnungen des Systems aufeinander abgestimmt. Dabei können die Anordnungen zunächst einzeln trainiert werden, ohne dass die Vorrichtungen anderer Anordnungen die Störsignaleinrichtungen beeinflussen. Weiter kann auch in diesem Fall vor dem Trainieren der Anordnungen zunächst die Vorrichtungen der Anordnungen separat voneinander trainiert werden, ohne dass eine Beeinflussung der Störeinrichtungen durch andere Vorrichtungen erfolgt. Alternativ können die Anordnungen und die in ihnen enthaltenen Vorrichtungen in einem einzigen Training des Systems aufeinander abgestimmt werden, wobei Ausgangssignale der Anordnungen die Störeinrichtungen anderer Anordnungen beeinflussen können.

Im Folgenden wird die Erfindung anhand einer beispielhaften Ausführungsform mittels der beigefügten Zeichnung beschrieben. Es zeigen:
- Figur 1A, B: eine schematische Darstellung der Vorrichtung;
- Figur 2A, B: eine schematische Darstellung der Vorrichtung gemäß Figur 1A, b mit weiteren Details;
- Figur 3: eine schematische Darstellung eines Beispiels der Vorrichtung mit einem FPGA-Chip;
- Figur 4A, B: eine schematische Darstellung des Beispiels aus Figur 3 in weiteren Ausführungen;
- Figur 5: eine schematische Darstellung eines Beispiels der Vorrichtung mit zwei Störeinrichtungen;
- Figur 6: eine schematische Darstellung einer Grundstruktur eines FPGA-Chips;
- Figur 7: eine schematische Darstellung eines Beispiels der Vorrichtung mit kapazitiven Störelementen;
- Figur 8: eine schematische Darstellung eines Beispiels der Vorrichtung mit heizenden und kühlenden Störelementen;
- Figur 9: eine schematische Darstellung eines Beispiels der Vorrichtung mit heizenden Störelementen;
- Figur 10: eine schematische Darstellung eines Beispiels der Vorrichtung mit schallemittierenden Störelementen;
- Figur 11: eine schematische Darstellung eines Beispiels der Vorrichtung mit Störelementen, die elektromagnetische Strahlung emittieren;
- Figur 12: eine schematische Darstellung eines Beispiels der Vorrichtung mit einer mustererzeugenden Störsignaleinrichtung;
- Figur 13: eine schematische Darstellung einer Anordnung mit einer Vielzahl von Vorrichtungen;
- Figur 14: eine schematische Darstellung eines Systems mit einer Vielzahl von Anordnungen;
- Figur 15: eine schematische Darstellung eines weiteren Beispiels des Systems in einer alternativen Darstellungsweise;
- Figur 16: eine schematische Darstellung eines Beispiels mit einer Vielzahl von miteinander über die Störeinrichtungen vernetzte Systeme;
- Figur 17: eine schematische Darstellung weiterer Beispiele für eine Anordnung von Vorrichtungen;
- Figur 18: ein Flussdiagramm des Verfahrens zum Trainieren von künstlichen neuronalen Netzwerken in einem System.

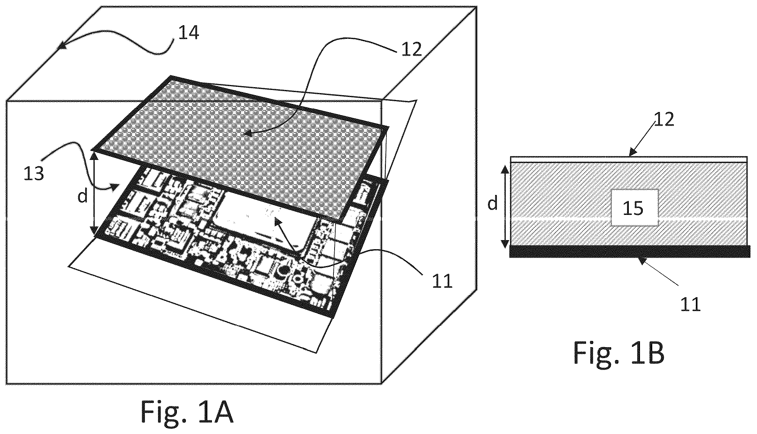

Die Figuren 1A und 1B zeigt die Vorrichtungen, die im Folgenden weiter untersetzt werden: gemäß Figur 1A in einer räumlichen Anordnung, gemäß Figur 1B die wesentlichen Komponenten der Vorrichtung im Schnitt. Es handelt sich beispielhaft um einen FPGA-Chip auf einer Ansteuerplatine 13, dessen Einzelbauteile über einen evolutiven Lernprozess verknüpft, konfiguriert und zu einem hardware-basierten künstlichen neuronalen Netzwerk 11 trainiert werden. Diese Ebene des hardware-basierten künstlichen neuronalen Netzwerks 11 entspricht weitgehend den im Stand der Technik beschriebenen und industriell verfügbaren chip-basierten Systemen und Ansteuerungen.

Im Folgenden wird die Bezeichnung "FPGA" stellvertretend für alle frei konfigurierbare elektronische Halbleiter-Chips verwendet. In einem in den nachfolgenden Beispielen noch präzisierten Abstand d befindet sich eine weitere optional arrayartig gegliederte Ebene als Störeinrichtung 12, deren Elemente als Störelemente, hier als kleine Kugeln dargestellt, gesteuert an-/abgeschaltet bzw. justiert werden können. Die Elemente für die Ansteuerung sind hier nicht gezeigt.

Diese Ebene der Störeinrichtung 12 kann Störsignale in Mustern erzeugen und wird als "Störsignal-Ebene" bezeichnet. Sie oder ihre Elemente können Störsignale erzeugen, die über den Raum, der Teil einer Koppeleinrichtung 15 ist, in die Ebene des hardware-basierten künstlichen neuronalen Netzwerks 11 lokal in mindestens einen Bereich des hardware-basierten künstlichen neuronalen Netzwerks 11 überkoppeln, wobei das Störsignal in den gesamten Bereich eingekoppelt wird. Der Bereich entspricht daher den durch die von dem Störsignal abgedeckten Regionen des hardware-basierten künstlichen neuronalen Netzwerks 11. Der Bereich kann das gesamte Netzwerk bedecken, d. h. das Störsignal kann in das gesamte Netzwerk einkoppeln. Dies kann homogen erfolgen. Weiter kann, wenn z. B. mehrere Bereiche vorgesehen sind, die Ausdehnung der Bereiche eine Gruppe von Einzelbauteilen des FPGA, einzelne Einzelbauteile oder lediglich Teilregionen der Einzelbauteile zugeordnet sein. Entsprechende Störsignal-Array-Komponenten können miniaturisierte Heiz- oder Kühl-Elemente, optische, akustische, ohmsche, elektromagnetische, kapazitive, mechanische oder auch quantenmechanische Komponenten sein. Alles, was in eine elektronische Schaltung, wie sie in der Ebene des hardware-basierten künstlichen neuronalen Netzwerks 11 realisiert ist, einkoppeln kann, ist anwendbar.

Über die Koppeleinrichtung 15, die im Folgenden auch als "Koppelraum" bezeichnet wird, können die in der Störeinrichtung 12 erzeugten Signale als Muster in die Ebene des hardware-basierten künstlichen neuronalen Netzwerks 11 übergekoppelt werden. Entsprechend der Elemente der Ebene der Störeinrichtung 12 kann es sich bei der Koppeleinrichtung 15 um ein Medium handeln, das z.B. eine thermische, ohmsche, elektromagnetische, kapazitive, mechanische oder auch quantenmechanische Übertragung der Signale vermittelt. Es kann im einfachsten Fall ein homogenes Medium, z. B. Gas, Flüssigkeit oder Festkörper sein. In der Regel kann das Medium jedoch eine vertikal und/oder horizontal strukturierte Kombination verschiedener Materialien aufweisen, um eine lokale Wirkung in Richtung der Ebene des hardware-basierten künstlichen neuronalen Netzwerks 11 und auf deren Array-Strukturierung angepasst zu erzielen, d. h. das Medium der Koppeleinrichtung 15 kann auf die Anordnung der verknüpfbaren Elemente des FPGA-Chips angepasst sein, d. h. auf das hardware-basierte künstliche neuronale Netzwerk. Der Abstand d kann ebenfalls variiert werden, wird in der Regel aber klein im Vergleich zur Flächenausdehnung der Ebene des hardware-basierten künstlichen neuronalen Netzwerks 11 gewählt werden, um lokale Effekte in dem hardware-basierten künstlichen neuronalen Netzwerk 11 erzeugen zu können, insbesondere im FPGA-Chip.

Im Unterschied zu konventionellen Nutzungen von Halbleiter-Chips und Halbleiter-Komponenten, können die Bauteile auf dem Bord der Ebene des hardware-basierten künstlichen neuronalen Netzwerks 11 partiell und nicht vollständig vor äußeren Einflüssen abgeschirmt werden, damit nur Einkopplungen von der Ebene der Störeinrichtung 12 möglich werden.

Daher kann wegen der erhöhten Empfindlichkeit der Bauteile des hardware-basierten künstlichen neuronalen Netzwerks 11 gegenüber externen Signalen eine Kapselung als Abschirmeinrichtung 14 der Vorrichtung gegen genau diese Störsignale vorgesehen werden.

In dieser Grundanordnung eines erfindungsgemäßen hardware-basierten künstlichen neuronalen Netzwerks 11 ist die Hauptkomponente für den evolutiven Lernprozess die Ebene des hardware-basierten künstlichen neuronalen Netzwerks 11. Die Ebene der Störeinrichtung 12 bildet eine übergeordnete, jedoch nachrangige Komponente, die diesen Prozess in der Ebene des hardware-basierten künstlichen neuronalen Netzwerks 11 komplexer werden lässt und ebenfalls über den oder einen zweiten Evolutions-Algorithmus und Lernprozess optimiert werden kann. Die Gesamteinheit aus 11 bis 15 kann als intelligentes Hardware-KI-System aufgefasst und bezeichnet werden und als KI-Grundeinheit bezeichnet werden.

Der Trainingsprozess kann in zwei Varianten durchgeführt werden. In einer ersten Alternative können das hardware-basierte künstliche neuronale Netzwerk 11 und die Störeinrichtung 12 gleichzeitig im Evolutionsprozess verändert werden. In einer zweiten Alternative kann zuerst lediglich das hardware-basierte künstliche neuronale Netzwerk 11 trainiert und, wenn dieses Training positive Ergebnisse zeigt, die Störeinrichtung 12 hinzugenommen werden. Weist die Vorrichtung mehr als ein hardware-basiertes künstliches neuronales Netzwerk 11 und mehr als eine Störeinrichtung 12 auf, lassen sich jedwede Kombinationen einem getrennten und gemeinsamen Training gemäß der ersten oder zweiten Alternative unterwerfen.

Im Unterschied zu Systemen aus dem Stand der Technik, sind über die Vermeidung undefinierter Einstreuungen, die definierte Abtrennung der Störsignale durch die Störeinrichtung 12 und die Koppeleinrichtung hochkomplexe Systeme realisierbar sowie beherrschbar, und es steigt die Wahrscheinlichkeit, ein positives Trainingsergebnis zu erzielen.

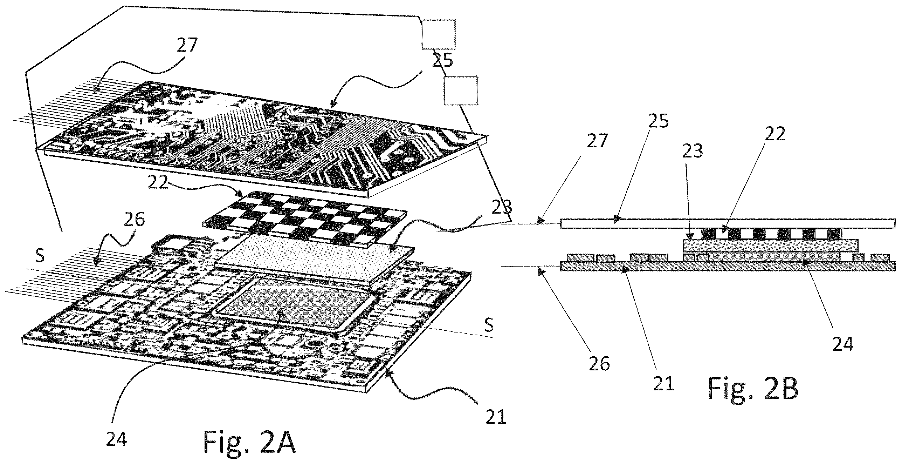

In den Figuren 2A und 2B ist ein Beispiel dargestellt, mit dem die räumlichen Verhältnisse erläutert werden. Figur 2A zeigt eine dreidimensionale Explosionszeichnung und Figur 2B einen Schnitt entlang der Linie S-S in Fig. 2A.

Ein FPGA-Chip 24, in dem das hardware-basierte künstliche neuronale Netzwerk implementiert ist, kann auf einem Bord 21 angeordnet sein, z.B. einer Mehrebenen-Leiterplatte zur Ansteuerung und Konfiguration des FPGA über die Anschlüsse 26. Die Konfiguration kann über Digital-Computer erfolgen. Der FPGA 24 ist nicht abschirmend gekapselt, sondern kann stattdessen mit dem Koppelmedium 23 der Koppeleinrichtung bedeckt sein, gefolgt von der Störeinrichtung 22, die hier arrayartig im Schachbrettmuster mit einzelnen Störelementen zur lokalen Erzeugung von Störsignalen für den FPGA dargestellt ist. Die Störeinrichtung 22 ist wiederrum auf ein Bord 25 zur Ansteuerung der Störelemente über die Anschlüsse 27 verbunden. Im einfachsten Fall können über An- und Abschalten der Störelemente der Störeinrichtung beliebige Muster erzeugt werden, die über das Koppelmedium 23 lokal auf den FPGA-Chip 24 einwirken.

Hinsichtlich des Abstands d aus Fig. 1A, ist er in diesem Beispiel klein, verglichen mit der Ausdehnung der Fläche des FPGA-Chips 24. In der Regel handelt es sich um einen Abstand zwischen 0,1 mm und 5 mm, vorzugsweise 0,5 mm. Die geometrischen Verhältnisse sind im Schnitt S-S in Fig. 2B erkennbar.

Beispielhaft kann das Array der Störeinrichtung 22 aus kleinen Heizelementen oder Peltier-Elementen bestehen, die über ein Medium 23 mit hoher Wärmeleitfähigkeit, z.B. eine Metall- oder auch Diamantschicht. Diese Schicht kann arrayartig in gut- und schlechtwärmeleitende Säulen strukturiert sein und ein Temperaturmuster auf den FPGA übertragen. Damit kann ein variables, trainierbares und schaltbares Störsignalmuster erzeugt werden.

Ein erster Strukturierungsgrad der Störeinrichtung, der ein Maß für die Strukturierung der Verteilung der Störelement ist, kann an die Strukturierung des FPGA, dessen Strukturierung in diesem Beispiel mit einem zweiten Strukturierungsgrad angegeben werden kann, angepasst werden, d.h. geometrisch gleichartig gewählt werden. Dann ist in jedem Bereich, in dem ein Störsignal von der Störeinrichtung in das hardware-basierte künstliche neuronale Netzwerk einkoppelt, das im FPGA implementiert ist, ein Grundelement des FPGA angeordnet. D. h. dann wird mit jedem Störelement je ein Grundelement des FPGA beeinflusst.

Dies ist jedoch nicht zwingend, denn der erste Strukturierungsgrad kann ebenso gut feiner als auch gröber als der zweite Strukturierungsgrad strukturiert werden, vorzugweise weist das Verhältnis von dem ersten Strukturierungsgrad zu dem zweite Strukturierungsgrad Werte in einem Bereich zwischen 10:1 bei der feineren Strukturierung und 0,1:1 bei der gröberen Strukturierung auf.

Das Koppelmedium 23 der Koppeleinrichtung kann eine Strukturierung aufweisen, die mit einem dritten Strukturierungsgrad angegeben wird. Auch der dritte Strukturierungsgrad kann feiner oder gröber ausgebildet sein als der zweite Strukturierungsgrad.

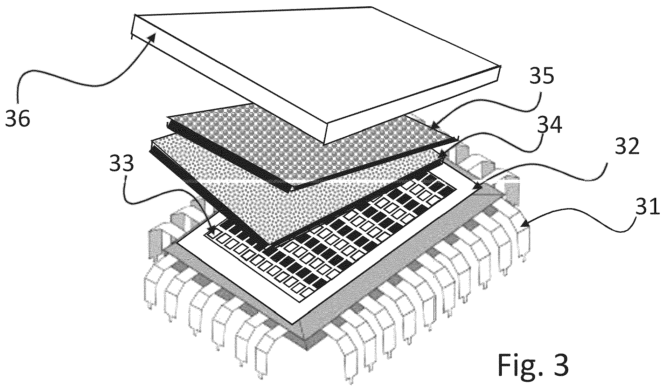

In Figur 3 ist eine kompakte technische Anordnung der unter Fig. 1A und 1B beschriebenen Vorrichtung dargestellt. In einer Halbleiterchipaufnahme 31, z.B. einer Keramik mit einer Vielzahl von Kontaktpads, kann ein FPGA-Chip 32 mit den verknüpfbaren elektronischen Grundkomponenten 33 angeordnet sein. Darüber kann das Koppelmedium 34 und direkt auf diesem die Störeinrichtung 35 mit einem Array aus Störelementen angeordnet sein.

Der gesamte Chip kann dann abschirmend gegen Einflüsse von außen gekapselt werden 36. Im Fall von elektromagnetischen Elementen in der Störeinrichtung kann das z.B. eine Metallkapselung sein, im Fall von optischen Störsignalen eine intransparente Umhüllung.

Dieser kompakte Chipaufbau erlaubt die Kombination solcher Chips auf einem Bord zu komplexen Strukturen oder auch zu Stapeln, wie es in den nachfolgenden Beispielen erläutert wird. Mit derartigen Chips können eine Vielzahl von KI-Grundeinheiten und deren Kombination in Ebenen und Hierarchien zusammengestellt werden.

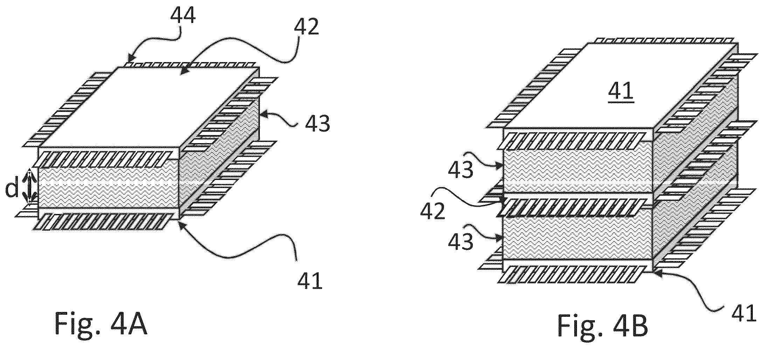

In den Figuren 4A und 4B ist schematisch die beispielhafte Kombination von kompakten Chipsystemen dargestellt. In Figur 4A ist eine Vorrichtung als KI-Grundeinheit entsprechend der Fig. 3 umfassend den FPGA 41, das Koppelmedium 43 der Koppeleinrichtung und der Störeinrichtung 42 mit den elektrischen Kontaktpads 44 dargestellt. Die Dicke des Koppelmediums kann zwischen 100 µm und 5 mm variieren, vorzugsweise 200 µm bis 600 µm. Weiter kann das Koppelmedium eine Vielzahl von Koppelelementen aufweisen, die gemäß einem dritten Strukturierungsgrad strukturiert oder unstrukturiert ausgeführt sein können. Insbesondere für die Verwendung von Signalmustern wird eine Strukturierung des Koppelmediums bereitgestellt.

In Figur 4B sind zwei Vorrichtungen miteinander kombiniert dargestellt. Die Kombination der beiden Vorrichtungen weist zwei FPGA 41, die über zwei Koppel-Medien 43 mit einer gemeinsamen Störeinrichtung 42 verbunden sind. Die FPGAs sind dabei Kopf an Kopf ausgerichtet.

In analoger Weise lassen sich weitere Kombinationen als horizontale aber auch vertikal stehende Stapel realisieren. Der Vorteil einer gemeinsamen Störeinrichtung für mehrere FPGA liegt in der Verringerung des Ansteueraufwandes.

Des Weiteren lassen sich Störsignalmuster erzeugen, die entweder fest vorgegeben werden oder im Training mit den FPGA evolutiv optimiert wurden. Derartige Systeme bieten zudem den Vorteil, dass auch zeitlich getrennt nacheinander oder alternierend der obere und der untere FPGA mit verschiedenen Störsignal-Mustern beaufschlagt werden kann, was ein komplexeres Training und komplexere KI-Systeme bei geringem Schaltaufwand zur Folge hat.

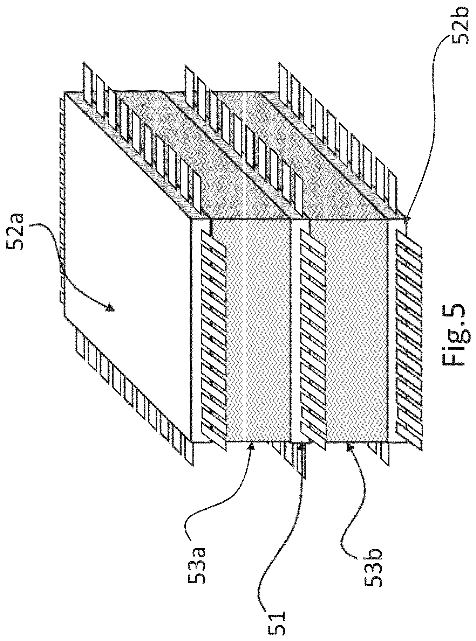

In Figur 5 ist eine weitere Variante dargestellt. In diesem Beispiel ist ein FPGA 51 zwischen zwei Koppelmedien 53a und 53b und zwei Störsignal-Ebenen 52a und 52b angeordnet. Damit ergeben sich im Sinne wachsender, jedoch wohl definierter Komplexität der Vorrichtung vielfache Möglichkeiten für die Einkopplung von Störsignalen.

So kann z. B. eine symmetrische Einkopplung gleicher Störsignalmuster von oben und unten auf den FPGA-Chip in der Mitte vorgesehen werden. Alternativ kann z. B. eine asymmetrische Einkopplung gleicher oder verschiedener Störsignalmuster in den FPGA-Chip vorgesehen werden. In einer weiteren Alternative kann zum Beispiel eine zeitlich getrennte Einkopplung von oben und von unten erfolgen. Weiter kann z. B. eine alternierende Einkopplung asymmetrischer Störsignale von oben und unten vorgesehen werden.

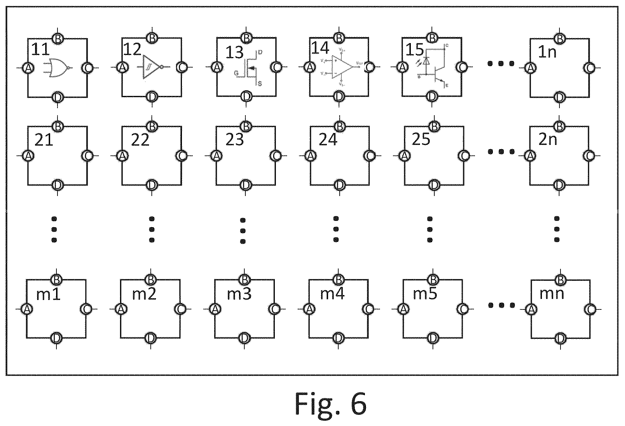

In Figur 6 ist schematisch das Grundprinzip und die Grundstruktur von FPGA-Chip-Arrays dargestellt. Da die FPGAs in der Regel als Array aufgebaut sind, wurde aus Gründen der Verständlichkeit die Darstellung mit Zeilen 1 bis m und Spalten 1 bis n gewählt.

Über jeweils vier Anschlüsse A, B, C, D können elektronische Grundelemente, deren Position mit den Indizes 11, 12, [...], m5, mn identifiziert werden können, kurzschlussfest konfiguriert miteinander zu einem hardware-basierten künstlichen neuronalen Netzwerk verbunden werden. Auch falsche Beschaltungen, z.B. den Ausgang eines Elements als Eingang zu benutzen, sind bei hardware-basierten künstlichen neuronalen Netzwerken erlaubt.

Wie mit den Grundelementen an den Positionen 11 bis 15 in der obersten Reihe des dargestellten Arrays beispielhaft gezeigt, können die Elemente des FPGA digitale als auch analoge Schaltungen sein. Die verwendeten Symbole entsprechen der elektronischen Nomenklatur. Es sind auch Mischungen von analogen und digitalen Vorrichtungen möglich. Die elektronischen Elemente mn werden nicht wie gewöhnlich gegen Störeinflüsse abgeschirmt, sondern weisen ggf. sogar Baugruppen auf, die empfindlich auf optische, akustische, thermische, elektromagnetische und andere Signale reagieren, die von der Störeinrichtung erzeugt werden. Die Art der Konfiguration und die zum Training verwendeten evolutiven Programme sind Stand der Technik und werden hier daher nicht näher erläutert.

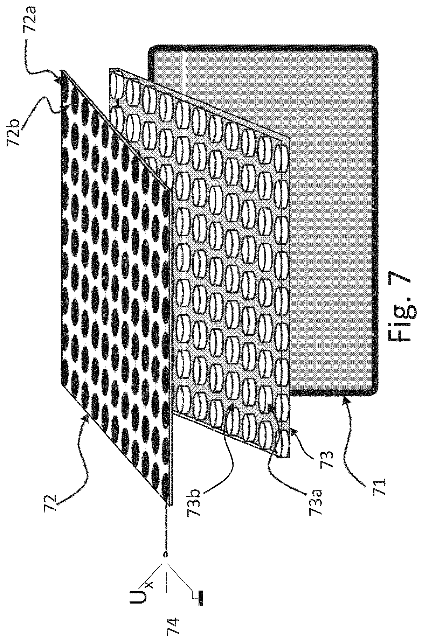

In Figur 7 sind die drei Ebenen der Vorrichtung (hardware-basiertes künstliches neuronales Netzwerk, Koppeleinrichtung und Störeinrichtung) mit einer kapazitiven Einstreuung dargestellt.

Das FPGA 71 weist als hardware-basiertes künstliches neuronales Netzwerk in diesem Beispiel einen zweiten Strukturierungsgrad, der feiner als der erste und dritte Strukturierungsgrad der Störsignaleinrichtung 72 und der Koppeleinrichtung 73 ist. Die Strukturierung des FPGA, der Störeinrichtung und der Koppeleinrichtung kann gleichartig oder auch unterschiedlich sein. Dementsprechend kann dann nicht nur ein einziges Grundelement des FPGA, sondern eine Gruppe von Grundelementen gleichzeitig oder lediglich ein Teilbereich eines Grundelements beeinflusst werden.

Die Störeinrichtung 72 kann als Störelemente beispielhaft Metallplättchen oder Metallpads 72a aufweisen, die in ein elektrisch isolierendes Medium 72b eingebettet sind. Jedes Pad 72a kann analog zum Betrieb des FPGA über ein Computerprogramm angesteuert werden. Im einfachsten Beispiel sind drei Belegungen eines jeden Pads möglich, wie bei 74 dargestellt: 1. Anlegen einer positiven oder negativen Spannung Ux, 2. offenes Pad, d.h. keine Potentialbindung, wobei das Pad sich sein Potential in der Chipumgebung selbst sucht, und 3. Verbindung mit der Masse, so dass beliebige Ladungsmuster im Array erzeugt werden können.

Im dargestellten Beispiel ist die Koppeleinrichtung 73 in gleicher Weise strukturiert, so dass unter jedem Metallpad ein Material mit hoher Dielektrizitätskonstante 73a als Koppelelement, eingebettet in ein Medium mit niedriger Dielektrizitätskonstante 73b, angeordnet sein kann. Mit der Oberfläche des FPGA 71 bilden die Metallpads lokale Kondensatoren aus, über die Verschiebungsströme in die jeweils lokal angrenzenden Bereiche des hardware-basierten künstlichen neuronalen Netzwerks eingekoppelt werden können.

Im evolutiven Trainingsprozess können analog zum Training des hardware-basierten künstlichen neuronalen Netzwerks auch die Belegungen der Störelemente 72a über einen Evolutions-Algorithmus variiert werden. D.h., zu Beginn kann für die Störeinrichtung 72 eine Zufallsbelegung mit Eingangssignalen erzeugt und angelegt werden. Dann kann das in dem FPGA implementierten künstliche neuronale Netzwerk ein Eingangssignal erhalten. Wird dieses von dem neuronalen Netzwerk am Ausgang richtig interpretiert, wird an der Konfiguration der Störeinrichtung 72 nichts verändert und das nächste Trainings-Signal an den FPGA angelegt. Wird dieses z.B. falsch bewertet, werden nach dem Zufallsprinzip einige wenige Pads bzw. Störelemente in der Belegung geändert, so wie es auch mit den Schaltverbindungen im FPGA erfolgt. Beide Algorithmen können, müssen aber nicht übereinstimmen. Wird das einige hundert bis tausend Male durchgeführt, was im Evolutionsalgorithmus als "Generationen" bezeichnet werden kann, kann sich die gewünschte Erfolgsrate der gesamten Vorrichtung einstellen.

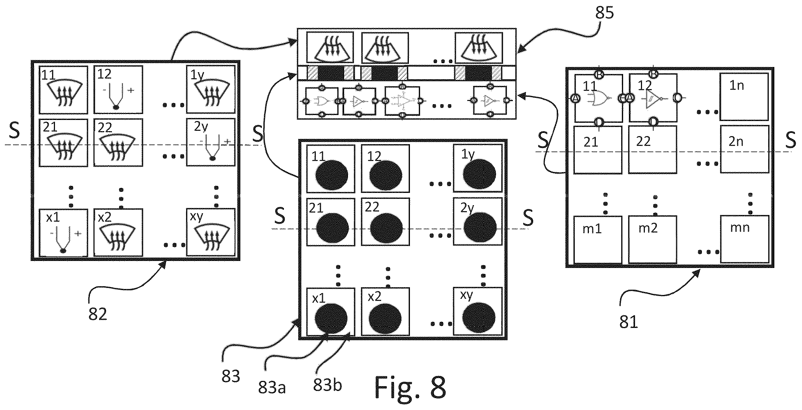

In Figur 8 ist ein 3-Ebenen-KI-Chip dargestellt, bei dem Störsignale über ein Array von Heiz- oder/und Peltier-Elementen 82, die in diesem Beispiel die Störelemente darstellen, erzeugt werden können. Über die Koppeleinrichtung 83 kann die Temperatur von den Störelementen auf die lokalen Grundelemente des FPGA 81 übertragen werden. Die arrayartig angeordneten Grundelemente an den Positionen 11 bis mn des FPGA können entweder nach den üblichen Halbleiterfertigungsverfahren temperaturempfindlich hergestellt werden, oder werden derart ausgeführt, dass sie auf kleine Temperaturdifferenzen, z. B. mehrere Grad oder Bruchteile davon, im Signalverhalten reagieren.

Die Koppeleinrichtung 83 ist auch in diesem Beispiel aus zwei Komponenten zusammengesetzt: den gut wärmeleitfähigen, zylindrischen Bereichen 83a und den schlecht wärmeleitenden Bereichen 83b dazwischen. Das Material 83a kann z.B. ein Metall, wie Kupfer oder Silber, oder eine halbleitertechnologisch prozessierte Diamantschicht sein. Das Isolationsmaterial 83b kann ein wenig wärmeleitendes Plastikmaterial, Glas oder auch ein Keramikmaterial sein.

Die Störeinrichtung 82, kann in diesem Beispiel als Störelemente eine Vielzahl von Heiz- oder/und Kühlelementen, z.B. miniaturisierte Widerstands-Elemente oder Peltier-Elemente, aufweisen. Auf diese Weise können beliebige Temperaturmuster auf das darunter befindliche FPGA übertragen werden. Die Temperaturdifferenzen können in weiten Bereichen gewählt werden, z. B. in einem Bereich zwischen -20°C und 100°C, vorzugsweise aber im Gradbereich oder darunter nahe der Raumtemperatur.

In dem Kasten 85, der oben in der Mitte der Figur 8 dargestellt ist, ist der Aufbau dieser KI-Grundeinheit im Vertikal-Schnitt S-S gezeigt. Auch hier muss die Array-Struktur der Ebenen der Störeinrichtung, der Koppeleinrichtung und des neuronalen Netzwerks nicht übereinstimmen, d.h. die Zahl der Störelemente und Koppelelemente kann, muss aber nicht der Zahl der elektronischen Grundelemente entsprechen.

Die erzeugten Temperaturmuster sind in der Regel statisch, d.h., dass sie für den Arbeitszyklus des neuronalen Netzwerks, was einem Entscheidungsdurchlauf entspricht, konstant sind. Es ist jedoch auch möglich, dynamische Veränderungen über mehrere Entscheidungsdurchläufe des FPGA zu erzeugen.

Das Training erfolgt analog zur Beschreibung aus Fig. 7.

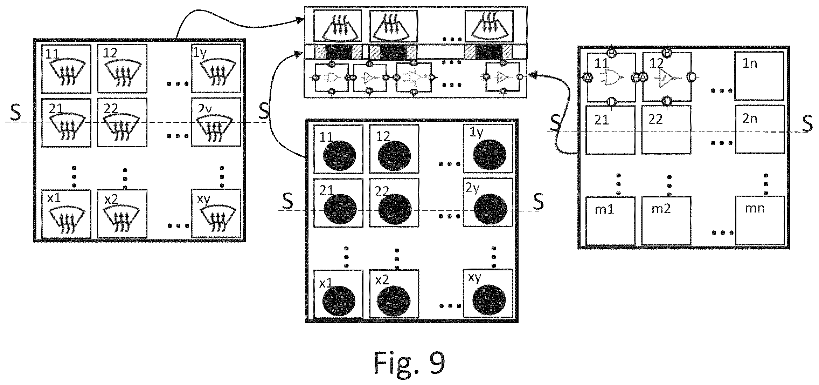

In Figur 9 ist eine Vorrichtung mit einer Störeinrichtung dargestellt, die lediglich Heiz-Elemente aufweist. Ansonsten ist dieses Beispiel wie in Fig.7 und 8 beschrieben aufgebaut.

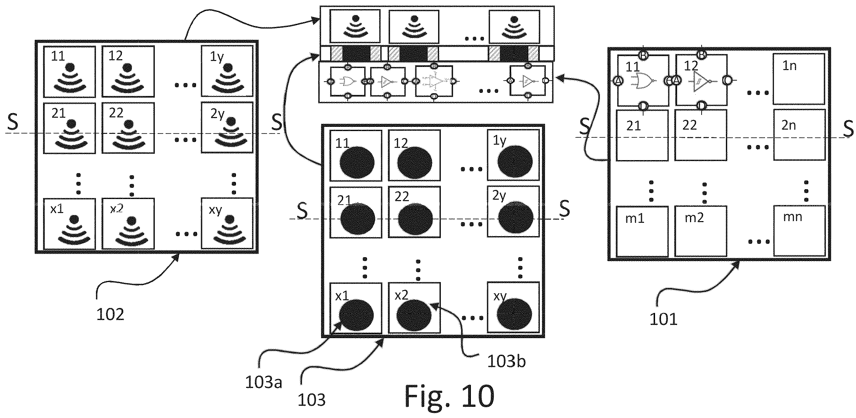

In Figur 10 ist eine Störeinrichtung 102 dargestellt, die als Störelemente miniaturisierte Schallsender, die z.B. über Vibration Schallsignale unterschiedlichster Frequenz ausstrahlen, aufweist. Die Schallsender können Piezoelemente oder Piezokristalle oder kleine Membranen sein, die einzelnen angesteuert Schallmuster erzeugen.

Die Koppeleinrichtung 103 kann in diesem Beispiel schallübertragende Bereiche 103a, z.B. eine mechanische Festkörperkopplung oder Miniatur-Sonotroden, und den schalldämpfende Zwischenräume 103b aufweisen, z.B. den Schall schluckende Materialien, z.B. Material mit kleinsten Hohlräumen.

Die Grundelemente des FPGA 101 können derart ausgelegt sein, dass sie in gewissem Umfang über Schallfrequenzen gestört werden können. Der Effekt kann verstärkt und komplexer ausgelegt werden, wenn die elektronischen Grundelemente des FPGA z. B. Schallempfänger-Bauteile aufweisen. Das kann partiell oder auch bei allen Grundelementen des FPGAs der Fall sein. Der Vorteil der Applikation von Schall ist dessen weiter Frequenzbereich, der vom Infraschall über den Hörbereich des Menschen bis hin zum Ultraschall reicht. Damit lassen sich nicht nur Schallmuster einer Frequenz, sondern auch Schallmuster verschiedener Frequenzen erzeugen.

Dieses Beispiel zeigt anschaulich die erweiterten Möglichkeiten, die das Einbringen von Störeinrichtungen und Koppeleinrichtungen in hardware-basierte künstliche neuronale Netzwerke mit sich bringt. In miteinander verschalteten Anordnungen und Systemen, wie sie in den nachfolgenden Figuren erläutert werden, kann jede dieser Störeinrichtungen als feststehendes Schallmuster in der Intensität variiert, in der Frequenz als Ganzes verschoben, in der Frequenzzusammensetzung/-spektrum verändert, als Muster geändert, oder in Kombination aus den vorhergehenden Optionen betrieben werden.

Wenn angenommen wird, dass das Gesamtsystem aus hardware-basiertem künstlichen neuronalen Netzwerk, Störeinrichtung und Koppeleinrichtung sei für ein bestimmtes Frequenzmuster optimiert worden und erreicht in dieser Ansteuerung seine höchste Erfolgsquote, würde eine Veränderung/Verstimmung der Störsignale zu einem schlechteren Ergebnis führen. Im Extremfall funktioniert das neuronale Netzwerk lediglich in einem bestimmten Intensitätsintervall oder Frequenzintervall. Damit besteht die Möglichkeit allein über die Störsignale Vorrichtungen zu verschlechtern bzw. zu verbessern, wenn sie vorher suboptimal betrieben wurden. Daraus ergeben sich Möglichkeiten viele Vorrichtungen in einer hierarchischen oder auch gleichberechtigten Weise derart zu verschalten, dass über die Erfolgsquote eines neuronalen Netzwerks, mit ihr verbundene weitere hardware-basierte künstliche neuronale Netzwerke über deren Störsignale beeinflusst werden können.

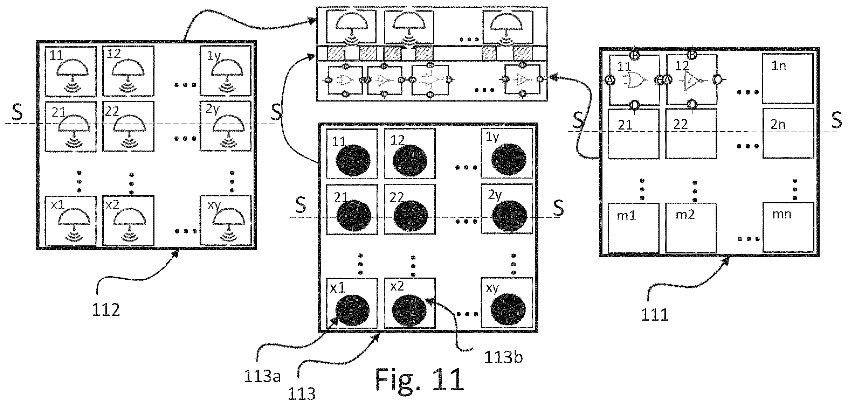

Figur 11 zeigt ein FPGA 111 umfassend ein künstliches neuronales Netzwerk der bereits beschriebenen Art. Die Störeinrichtung 112 kann in diesem Beispiel als Störelemente miniaturisierte Sender für hochfrequente elektromagnetische Wellen bis in den Mikrowellenbereich aufweisen, die z.B. antennenartig ausgebildet sein können oder ihr Signal über die Koppeleinrichtung 113 mittels eines Hohlleiters 113a als Koppelelement an den FPGA übertragen können.

Analog kann die Störeinrichtung als Störelemente Infrarot- oder LED-Elemente im sichtbaren Spektralbereich oder im UV aufweisen. Weiter kann dann die Einkopplung über Lichtwellenleiter oder über kleine Pinholes als Koppelelemente durchgeführt werden. Auch für diese Vorrichtung ergibt sich ein sehr breites Spektrum möglicher Betriebs- und Trainingsarten, analog zu Fig. 10.

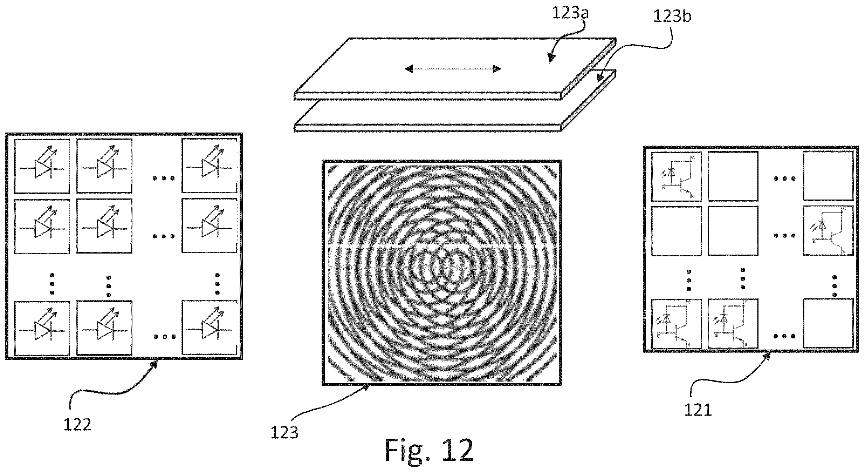

In Figur 12 ist eine alternative Vorrichtung mit einer Störeinrichtung dargestellt, die Störsignale in Mustern erzeugen kann. Dazu weist die Koppeleinrichtung 123 zwei oder mehr Ebenen 123a, 123b auf, auf denen jeweils Muster aufgebracht sein können, z. B. auf jeder Ebene konzentrische Ringe, die abwechselnd transparent und intransparent sind, wobei die Mittelpunkte der konzentrischen Ringe der beiden Ebenen gegeneinander verschoben sind. Damit ergeben sich symmetrische oder auch asymmetrische Überlagerungsmuster. Die Störeinrichtung 122 kann dann ein Leuchtdioden-Array aufweisen. Die Koppeleinrichtung 123 ist in diesem Fall kein Array wie in den vorhergehenden Beispielen. Stattdessen kann das Überlagerungsmuster die Musterbildung der Störsignale in dem neuronalen Netzwerk definieren. Der FPGA-Chip 121 kann in seinen elektronischen Grundelementen z.B. lichtempfindliche Bauteile wie aufweisen.

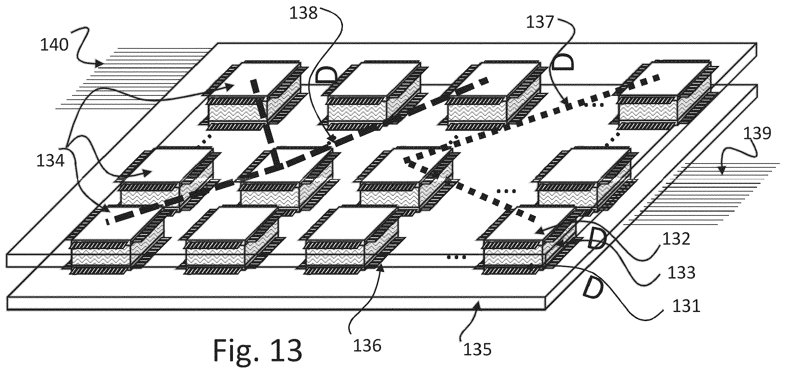

In Figur 13 ist eine Anordnung von Vorrichtungen als Ensemble aus KI-Grundeinheiten entsprechend Fig. 3 bis 5 dargestellt. Auf der Ansteuerplatine 135 können FPGA-Chips 131 elektrisch kontaktiert sein, wobei auf der Unterseite der überkopfstehenden transparent dargestellten Ansteuerplatine 136 die Störeinrichtungen 132 elektrisch kontaktiert sein können. Dazwischen sind die Koppeleinrichtungen 133 angeordnet.

Über erste Ansteuerungen 139 der Ansteuerplatine 135 für die FPGAs 131 und zweite Ansteuerungen 140 der Ansteuerplatine 136 für die Störeinrichtungen 132 können die KI-Grundeinheiten 134 wie bereits beschrieben, getrennt und/oder gemeinsam, trainiert werden. Wenn jede KI-Grundeinheit 134 auf eine andere Merkmalsgruppe trainiert wurde, zum Beispiel eine erste auf die Erkennung von Katzen, eine zweite auf Hunde, eine dritte auf Pferde usw., dann bildet die Anordnung in Fig. 13 ein komplexeres KI-System mit höherer Leistungsfähigkeit/Intelligenz als es die KI-Grundeinheiten als einzelne Vorrichtungen darstellen.

Die Störeinrichtungen können weiter, wie über die unterbrochenen Linien 137, 138 schematisch dargestellt, miteinander partiell elektrisch verbunden werden. Damit ergibt sich eine weitere Möglichkeit der Steuerung sowie des evolutiven Trainings der gesamten Anordnung.

Über diese Verbindungen können Signale zwischen den Störeinrichtungen 132 vermittelt werden, die in festgelegter Weise andere KI-Grundeinheiten in ihrer Leistungsfähigkeit verändern, z. B. ausschließlich über die jeweilige Einkopplung von Störsignalen, mit denen die entsprechenden künstlichen neuronalen Netzwerke in den FPGAs wie oben bereits erläutert beeinflusst werden können. Das kann z.B. über die Erhöhung oder Reduzierung der Intensität des Störsignals in der verbundenen KI-Grundeinheit erfolgen. Das bedeutet, dass die jeweilige KI-Grundeinheit verbessert oder auch überhaupt optimal agieren kann, z. B. die über der gestrichelten Verbindungslinie 138 verbundenen Vorrichtungen, oder aber auch verstimmt und damit verschlechtert oder abgeschaltet wird, z. B. die über die Verbindungslinie 137 verbundenen Vorrichtungen. Wenn beim oben angeführten Tiererkennungsbeispiel z. B. angenommen wird, dass die Hälfte der KI-Grundeinheiten Tiere erkennen kann und die andere Kunstgegenstände, die wie Tiere aussehen, kann über solch eine Verschaltung erreicht werden, dass am Anfang viele der KI-Grundeinheiten im suboptimalen Bereich über die Verstimmung der jeweiligen Störeinrichtungen gesteuert werden und z.B. bei 80% der maximalen Leistungsfähigkeit gefahren werden. Wenn die Vorrichtungen mit einem Eingangssignal z.B. dem Bild eines Maultiers beaufschlagt werden klassifizieren die einzelnen KI-Grundeinheiten dieses Eingangssignal mit unterschiedlichem Ergebnis.

Die Vorrichtungen, die Katzen erkennen können, geben z.B. 2% Übereinstimmung des Maultiers mit einer Katze aus, die Vorrichtungen, die Pferde erkennen können, geben z. B. eine 90% Übereinstimmung aus, die Vorrichtungen, die Kunstgegenstände erkennen können, können z. B. ebenfalls im Erkennungsbereich von wenigen Prozent bis 60% im Fall von Pferdeskulpturen reagieren. Die KI-Grundeinheit mit der höchsten Übereinstimmungsquote, in diesem Fall die die Vorrichtungen, die Pferde erkennen können, kann dann ihre Störeinrichtung auf optimale Funktion schalten. Weiter können gleichzeitig bisher verstimmte Störeinrichtungen der mit ihr verbundenen KI-Grundeinheiten ebenfalls in den optimalen Störsignal-Modus geschaltet werden, z.B. eine KI-Grundeinheit zur Erkennung von Wildpferden, eine zur Erkennung von Zebras und eine zur Erkennung von Mischlingen der Pferde-Familie. Gleichzeitig kann sie über Verbindungen zu den Vorrichtungen unterdrücken, die Kunstgegenstände erkennen können, alle, außer der mit der höchsten Trefferprozentzahl. Diese Vorrichtung mit der höchsten Trefferprozentzahl zur Erkennung von Kunstgegenständen kann über ihre Verbindungen weitere Vorrichtungen aktivieren, die Kunstgegenstände erkennen können, über eine optimale Anpassung der Störeinrichtungen.

Nun kann ein erneuter Durchlauf des Maultierbildes gestartet werden, bis entschieden ist, welchem Objekt im Gesamtsystem das Maultier am nächsten kommt und, ob es sich um ein Tier oder ein Gegenstand handelt.

Eine derartige Anordnung besitzt eine Trainingsebene mehr als die KI-Grundeinheiten, nämlich die, der Vernetzung der Vorrichtungen untereinander, was ebenfalls über evolutive Optimierungsstrategien erfolgen kann.

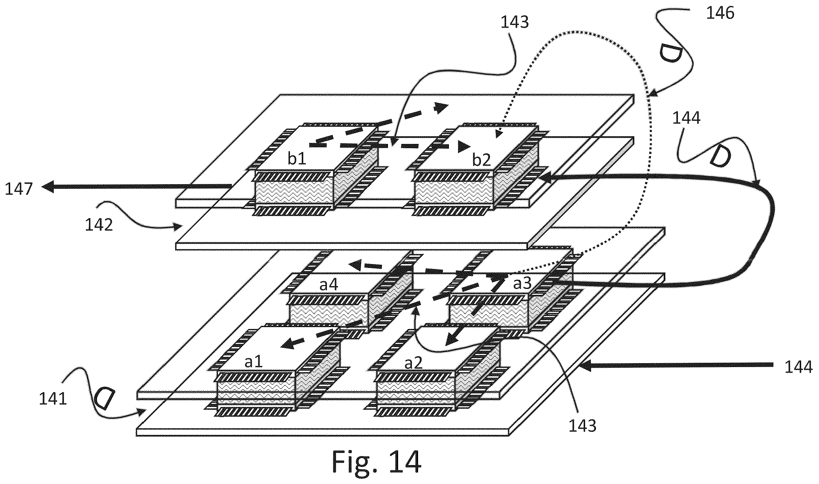

Mit einer Vielzahl, mindestens zwei, Anordnungen gemäß Fig. 13, können hierarchisch oder anderweitig komplex organisierte Systeme aufgebaut werden, wie in Figur 14 dargestellt. Gezeigt ist eine Basisebene 141, umfassend beliebig vielen KI-Grundeinheiten, wobei aus Gründen der Übersichtlichkeit in Figur 14 beispielhaft lediglich vier Vorrichtungen mit der Bezeichnung a1 bis a4 dargestellt sind, die miteinander über elektrische Verbindungen 143 zwischen den dazugehörigen Störeinrichtungen aktivierend bzw. unterdrückend vernetzt sein können. In diese Ebene kann das Eingangssignal 144 in alle KI-Grundeinheiten a1 bis a4 eingespeist werden, z. B. durch Parallelschaltung der Eingänge der Vorrichtungen.

Die KI-Grundeinheit mit der höchsten Erkennungswahrscheinlichkeit kann in die nächsthöhere Ebene 142 überkoppeln. Dort kann nun ebenfalls das Eingangssignal 144 an allen KI-Grundeinheiten anliegen, wobei aus Gründen der Übersichtlichkeit lediglich zwei Vorrichtungen b1, b2 in Ebene 142 dargestellt sind, die ebenfalls partiell oder vollständig über elektrische Verbindungen 143 zwischen den Störeinrichtungen miteinander vernetzt sein können. Auch in dieser Ebene kann eine KI-Grundeinheit mit der höchsten Erkennungswahrscheinlichkeit ermittelt werden, die dann das Ausgangssignal 147 generieren kann.

In der Regel kann die Zahl der KI-Grundeinheiten in der untersten Ebene am größten sein und in Richtung übergeordneter Ebenen abnehmen. Das ist aber nicht zwingend. Es können mit jeder Ebene auch erweiterte Bewertungskategorien oder auch neue Verknüpfungen hergestellt werden. Beispielsweise können in den übergeordneten Ebenen, nach der Erkennung des Objektes, Muster verglichen und in der nächsten Ebene akustische Signale hinzugenommen werden, damit Widersprüche sichtbar werden, die ansonsten zu einer Fehleinschätzung führen würden. Beispielsweise, wenn ein als Katze erkanntes Objekt wiehert wie ein Pferd. Ein solches System kann in übergeordneten Ebenen größere KI-Grundeinheiten als in einer der untergeordneten Ebene aufweisen.

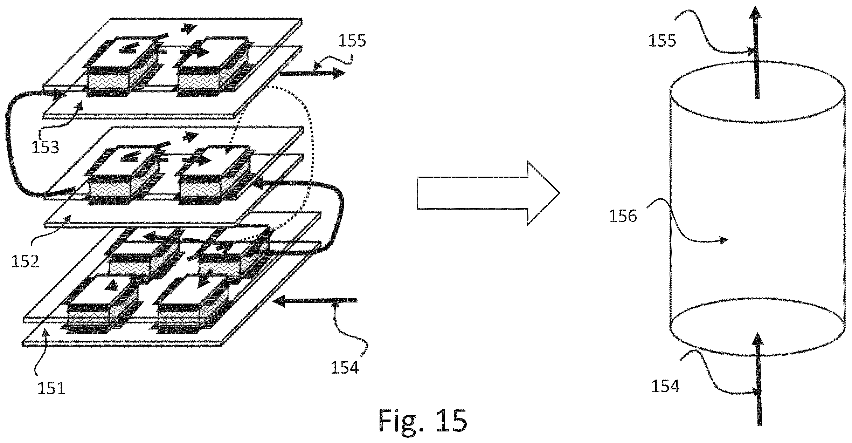

Figur 15 zeigt links ein System mit einer hierarchischen KI-Struktur, bestehend aus drei Ebenen 151, 152 und 153 mit dem Eingang 154 und dem Ausgang 155 analog zu Fig. 14. Derartige komplexe KI-Verschaltungen werden im Folgenden, wie rechts in Figur 15 dargestellt, als Zylinder 156, mit dem Eingang 154 und dem Ausgang 155 zusammengefasst, um komplexere Strukturen darstellen zu können.

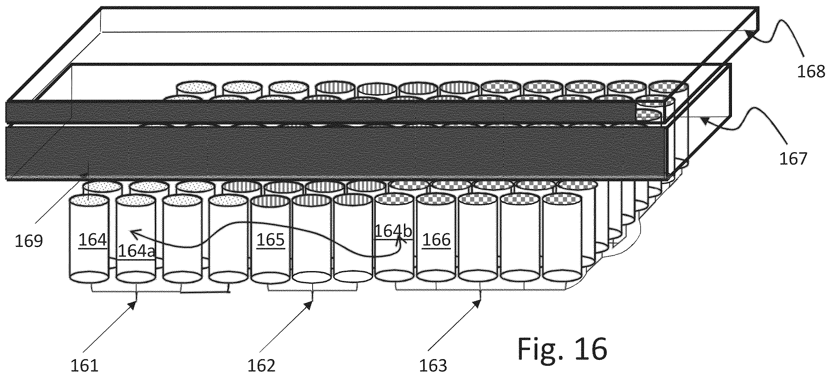

In Figur 16 ist schematisch eine noch komplexere Struktur dargestellt. Sie besteht aus einer Vielzahl von Systemen gemäß Figur 15, die als Zylinder 164-166 dargestellt sind. Sie können in einer Ebene in die gleiche Richtung orientiert ein, wobei aus Gründen der Übersichtlichkeit lediglich an dem Zylinder 164 beispielhaft der jeweilige Eingang 161 nach unten und der jeweilige Ausgang 169 nach oben ausgerichtet sind.

Die Systeme können in Domänen angeordnet sein, die durch ein spezifisches Muster auf der Oberseite der entsprechenden Zylinder markiert sind, wobei je ein Muster System einer Domäne markiert.

In Fig. 16 sind drei Domänen abgebildet, die sich aus drei Systemtypen zusammensetzen 164, 165, 166 können. Wie bei Systemtyp 166 zu sehen, müssen sich nicht alle Systeme einer Domäne in unmittelbarer Nachbarschaft befinden. Einzelne System können auch als solitäre Einheit in einer anderen Domäne angeordnet sein (hier nicht dargestellt). Auf diese Weise lassen sich über die Störeinrichtungen starke und schwache Wechselwirkungen zwischen den Domänen verwirklichen.

Die Systeme einer Domäne können ein gemeinsames Eingangssignal erhalten. Es ist zweckmäßig, die Domänen derart zu organisieren, dass sie jeweils verschiedene oder abgewandelte Eingangssignale, z.B. Teile des allgemeinen Eingangssignals, erhalten, die in Figur 16 mit den Referenzzeichen 161, 162 und 163 bezeichnet sind.

Zwischen den Systemen können wechselseitige oder auch gerichtete Verbindungen bestehen, über die sie angeregt oder auch unterdrückt werden können oder auch andere System anregen oder unterdrücken. Diese Verbindungen können zumeist aus der obersten Ebene, d.h. der Ergebnis-Ebene heraus, vgl. Fig. 15, ausgehen. Wenn Eingangssignale 161 bis 163 anliegen, können die einzelnen-System bereits zu komplexeren Antworten mit verschiedener Erkennungswahrscheinlichkeit als ohne diese Verbindungen kommen.

Analog zur Arbeitsweise der Einzelsysteme gemäß Fig. 14 und 15, können sich die Systeme innerhalb der Domäne und über diese hinaus verstärken und schwächen. Über die Verbindungen zu anderen Domänen, die ohne weiteres weit auseinander liegen können, was beispielhaft über den Verbindungspfeil von System 164a zu System 164b dargestellt ist, lassen sich größere System-Ensembles in ihrer Aktivität über die Störeinrichtungen steuern. Diese Ensembles von System weisen eine weitere Trainingsebene zu den bereits oben beschriebenen auf.

Das System mit der höchsten Trefferquote einer Domäne kann über eine Schalterebene 167 überkoppeln, die das Ergebnis in eine Projektionsebene 168 einspeisen, in der die Ergebnisse der anderen Domänen mit hohen Trefferquoten und das Eingangssignal zum Vergleich eingekoppelt und angezeigt werden können.

Diese Anordnung erlaubt es beispielsweise, Pandämonium-ähnliche Strukturen umzusetzen, wie sie beim menschlichen Gehirn vermutet werden. Die Systeme entsprechen der Säulenstruktur der Großhirnrinde, die Domänen zum Beispiel dem optischen, akustischen, haptischen, olfaktorischen Cortex. Über die Querverbindungen zwischen den Systemen und zwischen den Domänen lassen sich Assoziations-analoge Modi erzeugen und trainieren, die letztendlich nichts Anderes als Verknüpfungen eigentlich nicht miteinander in Relation stehender Erscheinungen beispielsweise die Umsetzung eines optischen Musters in Musik etc. darstellen. Wie erkennbar wird, lässt sich mit den zu Grunde liegenden Vorrichtungen, z. B. FGPA mit Störeinrichtung, ihrer Vernetzung und Beeinflussung über die Störeinrichtungen, die Verknüpfung von Vorrichtungen zu Anordnungen und deren Zusammenfassung in Systemen, nachfolgend über die Anordnung der Systeme in Ebenen und Domänen, ein Gesamt-KI-System kreieren, dass über eine Vielzahl nacheinander oder/und gemeinsam auszuführender evolutiver Trainingszyklen universell intelligent gemacht werden kann. Je umfangreicher die Systeme, umso komplexer lässt sich auch die Trainingsstruktur gestalten.

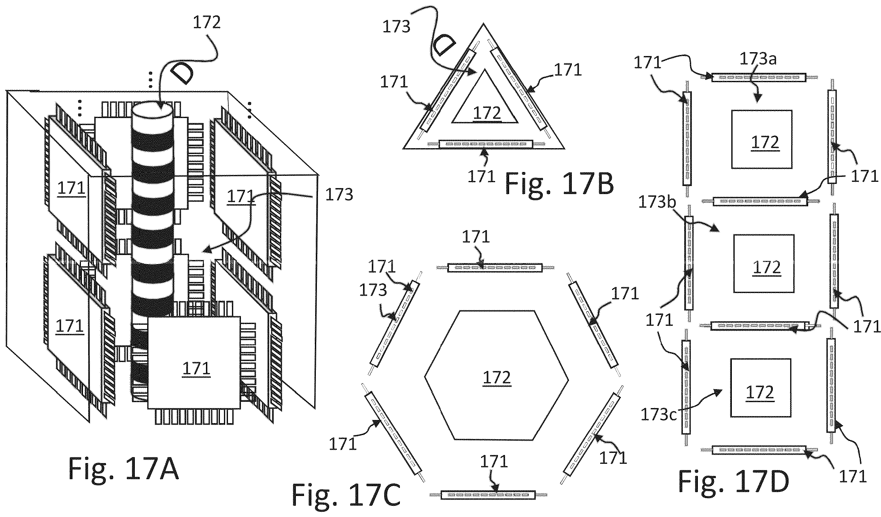

In den Figuren 17A bis 17D sind alternative Vorrichtungen dargestellt. Für den Fall, dass die Störeinrichtung 172 nicht nah an die FPGAs 171 angeordnet sein sollen, um Störsignale nicht in so feinen Mustern wie in Fig. 1 bis 16, sondern diese breiter und für viele FPGAs in gleicher oder ähnlicher Weise einzukoppeln, kann die Vorrichtung mehrere FPGAs 171 und Ansteuerungsplatinen aufweisen, die z. B. gemäß Figur 17A im Quadrat um eine gemeinsame Störeinrichtung 172 angeordnet werden, die als Säule ausgebildet sein kann. Solch eine Vierergruppe von FPGAs 171, oder z. B. auch Achtergruppe (aus Gründen der Übersicht sind lediglich sieben dargestellt), kann dann in Verbindung mit der Störeinrichtung 172 und der dazwischen angeordneten Koppeleinrichtung 173 eine KI-Grundeinheit bilden.

In den Figuren 17B bis 17D sind weiter Beispiele für Vorrichtungen in Aufsicht dargestellt. In Figur 17B sind die FPGAs einer Vorrichtung in einer Dreieck-Anordnung angeordnet und in Figur 17C in einer Sechseck-Anordnung.

Figur 17D zeigt eine Vorrichtung, deren FPGAs und damit hardware-basierte künstliche neuronale Netzwerke in einem Viereck-Kettensystem angeordnet sind. Das Koppelmedium der Koppeleinrichtung 173 kann ein Gas oder ein die jeweiligen Störsignale gut zu den FPGA-Chips übertragendes Material sein. In der Regel kann es wegen der Breitenwirkung aus der Störsignalsäule 172 homogen ausgebildet sein. Alternativ kann es eine schichtweise oder andersartige Zusammensetzung aus gut und schlecht übertragenden Materialien aufweisen. In analoger Weise lassen sich andere Gruppierungen vornehmen. Allen ist gemein, dass sie zu komplexeren Anordnungen, System und Ensembles kombiniert werden können, wie sie in Fig. 13 bis 16 beschrieben wurden.

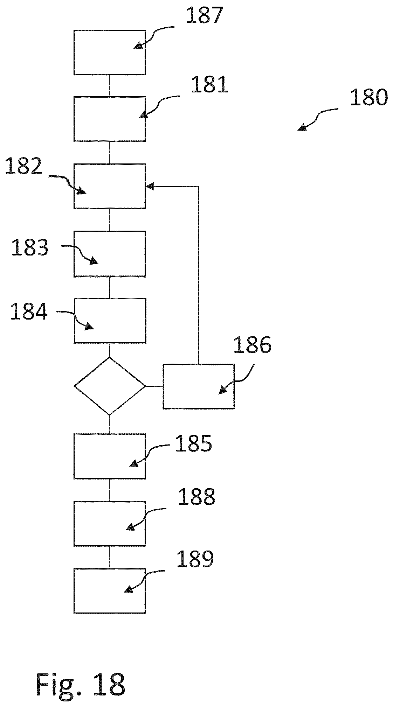

In Figur 18 ist ein Flussdiagramm dargestellt, dass ein Verfahren zum Trainieren eines Systems gemäß der vorangegangenen Beschreibung darstellt, wobei zunächst ein Verfahren 180 zum Trainieren eines künstlichen neuronalen Netzwerks in einer Vorrichtung gemäß der vorangegangenen Beschreibung durchgeführt wird. Dabei können zunächst die Vorrichtungen des Systems trainiert werden.

In einem ersten optionalen Schritt 187 des Verfahren 180 kann das hardware-basierte künstliche neuronale Netzwerk einer Vorrichtung zunächst ohne Einkopplung von Störsignalen trainiert werden. In diesem Schritt wird das hardware-basierte künstliche neuronale Netzwerk auf einen vorläufigen Leistungsfähigkeitswert trainiert.

In einem weiteren Schritt 181 können Soll-Ausgabedaten definiert werden, die das gewünschte Ergebnis der Verarbeitung von bereitgestellten Trainingsdaten durch das hardware-basierte künstliche neuronale Netzwerk darstellen. Dieser Schritt kann jederzeit vor den nachfolgenden Schritten und auch gleichzeitig oder vor dem optionalen Schritt 187 durchgeführt werden.

Weiter können in einem Schritt 182 die bereitgestellten Trainingsdaten für das Training des hardware-basierten künstlichen neuronalen Netzwerks verwendet werden. Dazu werden die Trainingsdaten in die Eingangsebene des neuronalen Netzwerks eingespeist, wobei die Störeinrichtung Störsignale in mindestens einen Bereich des hardware-basierten künstlichen neuronalen Netzwerks einkoppelt. Dabei können Teile eines Knotens des hardware-basierten künstlichen neuronalen Netzwerks, ein ganzer Knoten oder mehrere Knoten in dem mindestens einen Bereich angeordnet sein.

In einem weiteren Schritt 183 werden die Ausgabedaten des hardware-basierten künstlichen neuronalen Netzwerks ermittelt. Da das Netzwerk hardware-basiert ist, erfolgt die Verarbeitung der Trainingsdaten in allen Knoten einer Netzwerkebene gleichzeitig, so dass die Ausgabedaten innerhalb von einigen ms bereitstehen.

Danach wird in einem Schritt 184 eine Abweichung zwischen den Ausgabedaten und den Soll-Ausgabedaten ermittelt. Wenn die Abweichung außerhalb eines vordefinierten Toleranzbereiches liegt, z. B., wenn die Abweichung mehr als 1 % beträgt, wird das hardware-basierte künstliche neuronale Netzwerk neu konfiguriert. Weiter kann optional auch das mindestens eine Störsignal verändert werden. Wenn mehrere Störsignale verwendet werden, reicht es aus, ein einziges Störsignal zu verändern, z. B. durch Ansteuern eines Störelements der Störeinrichtung.

Die Schritt 182 bis 184 werden mit dem veränderten hardware-basierten künstlichen neuronalen Netzwerk und der Einspeisung der ggf. veränderten Störsignale wiederholt.

Sofern die Abweichung innerhalb des vordefinierten Toleranzbereiches liegt, wird das Training der Vorrichtung mit Schritt 185 beendet.

Wenn alle Vorrichtungen mit dem Verfahren 180 trainiert wurden, kann in einem weiteren Verfahren 188 eine Anordnung aus den Vorrichtungen trainiert werden. Dazu werden die miteinander über die Störeinrichtungen gekoppelten Vorrichtungen der Anordnung gemäß der Schritte 182 bis 186 trainiert. Dabei sei jedoch nicht ausgeschlossen, dass die Anordnung auch ohne vorherige Durchführung des Verfahrens für die Vorrichtungen trainiert werden kann.

Bei dem Training der Anordnung kann analog zum Verfahren 180 vorgegangen werden, wobei zumindest einige Störeinrichtungen durch die hardware-basierten künstlichen neuronalen Netzwerke anderer Vorrichtungen beeinflusst bzw. gesteuert werden können.

Wenn alle Anordnungen eines Systems mit dem Verfahren 188 trainiert wurden, kann das System gemäß dem Verfahren 189 trainiert werden. Dazu werden die miteinander über die Störeinrichtungen gekoppelten Vorrichtungen bzw. Anordnungen des Systems gemäß der Schritte 182 bis 186 trainiert. Dabei sei jedoch nicht ausgeschlossen, dass das System auch ohne vorherige Durchführung des Verfahrens für die Anordnungen oder der Vorrichtungen trainiert werden kann.

Weiter kann ein Ensemble derart trainiert werden, dass zunächst die Systeme gemäß der oben angeführten Beschreibung trainiert werden und dann das gesamte Ensemble. Es sei jedoch nicht ausgeschlossen, dass das Ensemble auch ohne vorheriges Training der Systeme, der Anordnung und/oder der Vorrichtungen trainiert werden kann.

Das oben beschriebene Beispiel dient in keiner Weise einer Beschränkung der Erfindung.

## Patentansprüche

1. Vorrichtung zum Betreiben eines hardware-basierten künstlichen neuronalen Netzwerks, umfassend mindestens ein hardware-basiertes künstliches neuronales Netzwerk (11, 24, 32, 41, 51, 71, 81, 101, 111, 121, 131, 171) wobei die Vorrichtung mindestens eine Störeinrichtung (12, 22, 35, 42, 52a, 52b, 72, 82, 102, 112, 122, 132, 172) zum Einkoppeln mindestens eines Störsignals in mindestens einem Bereich des hardware-basierten künstlichen neuronalen Netzwerks und mindestens eine Koppeleinrichtung (15, 23, 34, 43, 53a, 53b, 73, 83, 103, 113, 123, 133, 173) aufweist, wobei die Koppeleinrichtung zwischen der Störeinrichtung und dem hardware-basierten künstlichen neuronalen Netzwerk angeordnet ist und zum Übertragen des mindestens einen Störsignals von der Störeinrichtung in den gesamten mindestens einen Bereich ausgebildet ist, **dadurch gekennzeichnet, dass** die Störeinrichtung eine Vielzahl von einzeln ansteuerbaren Störelementen (72a) zum Einkoppeln eines Störsignals in das hardware-basierte neuronale Netzwerk aufweist, wobei die Störelemente ein Störsignal in unterschiedliche Bereiche des hardware-basierten künstlichen neuronalen Netzwerks einkoppeln.

2. Vorrichtung nach Anspruch 1, wobei das hardware-basierte künstliche neuronale Netzwerk in dem mindestens einen Bereich mindestens ein Bauteil aufweist, das bei Empfang des mindestens einen Störsignals zum Reduzieren des Signal-zu-Rausch-Verhältnisses ausgebildet ist, wobei die Störeinrichtung vorzugsweise ein optisches, akustisches, kapazitives, elektromagnetisches, quantenmechanisches, ohmsches, thermisches und/oder ionisierendes Störsignal erzeugt.

3. Vorrichtung nach Anspruch 1 oder 2, wobei die Vielzahl der Störelemente auf einer Ebene verteilt, vorzugsweise arrayartig, angeordnet sind, wobei die Koppeleinrichtung ein Medium mit einer Vielzahl von Koppelelementen (73a, 83a, 103a, 113a) zum Übertragen des mindestens einen Störsignals in den mindestens einen Bereich aufweist, wobei die Koppelelemente wie die Störelemente in der Ebene verteilt sind.

4. Vorrichtung nach einem der Ansprüche 1 bis 3, wobei der mindestens eine Bereich eine Ausdehnung aufweist, die der Größe des hardware-basierten künstlichen neuronalen Netzwerks entspricht oder kleiner als die Größe des hardware-basierten künstlichen neuronalen Netzwerks ausgebildet ist.

5. Vorrichtung nach einem der vorangegangenen Ansprüche, wobei die Vorrichtung mindestens einen Halbleiterchip aufweist, wobei der Halbleiterchip das hardware-basierte künstliche neuronale Netzwerk aufweist, wobei das hardware-basierte künstliche neuronale Netzwerk vorzugsweise in einem integrierten Schaltkreis, weiter vorzugsweise in einem Field Programable Gate Array oder in einer anwendungsspezifischen integrierten Schaltung, ausgebildet ist.

6. Vorrichtung nach einem der vorangegangenen Ansprüche, wobei die Vorrichtung eine Abschirmeinrichtung (14, 36) zum Abschirmen von äußeren Störsignalen, die von der gleichen Art des mindestens einen Störsignals sind, aufweist, wobei die Abschirmeinrichtung das hardware-basierte künstliche neuronale Netzwerk, die Koppeleinrichtung und die Störeinrichtung umgibt.

7. Anordnung einer Vielzahl von Vorrichtungen nach einem der vorangegangenen Ansprüche, wobei die hardware-basierten künstlichen neuronalen Netzwerke der Vorrichtungen miteinander seriell und/oder parallel elektrisch verbunden sind, wobei vorzugsweise die Störeinrichtungen von zumindest einer ersten Vorrichtung der Vielzahl von Vorrichtungen und einer zweiten Vorrichtung der Vielzahl von Vorrichtungen als eine gemeinsame Störeinrichtung ausgebildet sind, wobei weiter vorzugsweise eine Ausgangsebene des hardware-basierten künstlichen neuronalen Netzwerks einer dritten Vorrichtung der Vielzahl von Vorrichtungen zum Steuern der Störeinrichtung einer vierten Vorrichtung der Vielzahl von Vorrichtungen ausgebildet ist.

8. System umfassend eine Vielzahl von Anordnungen nach Anspruch 7, wobei eine erste Anordnung der Vielzahl von Anordnungen zum Steuern mindestens einer Störeinrichtung in einer zweiten Anordnung der Vielzahl von Anordnungen ausgebildet ist.

9. Verfahren zum Trainieren eines hardware-basierten künstlichen neuronalen Netzwerks in einer Vorrichtung nach einem der Ansprüche 1 bis 6, wobei das Verfahren (180) zumindest folgende Schritte aufweist:
- Definieren (181) von Soll-Ausgabedaten bei der Verarbeitung von bereitgestellten Trainingsdaten;
- Einspeisen (182) der Trainingsdaten in das hardware-basierte künstliche neuronale Netzwerk und Einkoppeln mindestens eines Störsignals in den mindestens einen Bereich des hardware-basierten künstlichen neuronalen Netzwerks mittels der mindestens einen Störeinrichtung;
- Ermitteln (183) von Ausgabedaten des hardware-basierten künstlichen neuronalen Netzwerks;
- Ermitteln (184), ob mindestens eine Abweichung zwischen den Ausgabedaten mit den Soll-Ausgabedaten besteht, die außerhalb eines vorbestimmten Toleranzbereiches angeordnet ist;
wenn die Abweichung innerhalb des Toleranzbereichs angeordnet ist:
- Beenden (185) des Verfahrens; und
wenn die Abweichung außerhalb des vorbestimmten Toleranzbereichs angeordnet ist:
- Ändern (186) des hardware-basierten künstlichen neuronalen Netzwerks und vorzugsweise Ändern des mindestens einen Störsignals und Wiederholen der vorgenannten Schritte 182 bis 184,
wobei die Vielzahl der ansteuerbaren Störelemente der Störeinrichtung der Vorrichtung derart angesteuert werden, dass die Störsignale über das hardware-basierte künstliche neuronale Netzwerk ein vordefiniertes Störsignal-Muster bilden, wobei nacheinander mehrere Trainings des hardware-basierten künstlichen neuronalen Netzwerks mit verschiedenen vordefinierten Störsignal-Mustern durchgeführt werden.

10. Verfahren nach Anspruch 9, wobei mittels des eingekoppelten Störsignals in dem mindestens einen Bereich ein Signal-zu-Rauschverhältnis von höchstens 15 dB, vorzugsweise höchstens 10 dB, weiter vorzugsweise höchstens 0 dB erzeugt wird.

11. Verfahren nach Anspruch 9 oder 10, wobei vor dem Schritt: Definieren von Soll-Ausgabedaten bei der Verarbeitung von bereitgestellten Trainingsdaten, das hardware-basierte künstliche neuronale Netzwerk ohne Einkopplung von Störsignalen trainiert (187) wird.

12. Verfahren zum Trainieren hardware-basierten künstlichen neuronalen Netzwerken in einer Anordnung nach Anspruch 7, wobei das Verfahren (188) zum Trainieren hardware-basierten künstlichen neuronalen Netzwerks in einer Vorrichtung nach einem der Ansprüche 9 bis 11 auf die hardware-basierten künstlichen neuronalen Netzwerke der Vorrichtungen angewendet wird, vorzugsweise nachdem die Vorrichtungen außerhalb der Anordnung mittels des Verfahrens (180) gemäß einem der Ansprüche 10 bis 13 separat trainiert wurden.

13. Verfahren (189) zum Trainieren von hardware-basierten neuronalen Netzwerken in einem System nach Anspruch 8, wobei das Verfahren (180) zum Trainieren hardware-basierten künstlichen neuronalen Netzwerks in einer Vorrichtung nach einem der Ansprüche 9 bis 11 auf die hardware-basierten künstlichen neuronalen Netzwerke der Vorrichtungen angewendet wird, vorzugsweise nachdem die Anordnungen außerhalb des Systems mittels des Verfahrens (188) zum Trainieren hardware-basierten künstlichen neuronalen Netzwerken in einer Anordnung gemäß Anspruch 12 separat trainiert wurden.

## Claims

1. A device for operating a hardware-based artificial neural network, comprising at least one hardware-based artificial neural network (11, 24, 32, 41, 51, 71, 81, 101, 111, 121, 131, 171) wherein the device comprises at least one disturbance device (12, 22, 35, 42, 52a, 52b, 72, 82, 102, 112, 122, 132, 172) for coupling at least one disturbance signal in at least one region of the hardware-based artificial neural network and at least one coupling device (15, 23, 34, 43, 53a, 53b, 73, 83, 103, 113, 123, 133, 173), wherein the coupling device is located between the disturbance device and the hardware-based artificial neural network and is designed to transmit at least one disturbance signal from the disturbance device to the entire at least one area, **characterized in that** the disturbance device contains a plurality of individually controllable disturbance elements (72a) for coupling a disturbance signal into the hardware-based neural network, where the disturbance elements couple a disturbance signal into different areas of the hardware-based artificial neural network.

2. The apparatus according to claim 1, wherein the hardware-based artificial neural network in which at least one region has at least one component which is designed to reduce the signal-to-noise ratio when receiving at least one disturbance signal, wherein the disturbance device preferably generates an optical, acoustic, capacitive, electromagnetic, quantum mechanical, resistive, thermal and/or ionizing disturbance signal.

3. The apparatus according to claim 1 or 2, wherein the plurality of the disturbance elements is distributed on a plane, preferably array-like, wherein the coupling means has a medium having a plurality of coupling elements (73a, 83a, 103a, 113a) for transmitting at least one disturbance signal to at least one region, wherein the coupling elements are distributed in the plane like the disturbance elements.

4. An apparatus according to any one of claims 1 to 3, wherein at least one region has an extent equal to the size of the hardware-based artificial neural network or is smaller than the size of the hardware-based artificial neural network.

5. Apparatus according to any of the preceding claims, wherein the apparatus comprises at least one semiconductor chip, wherein the semiconductor chip comprises the hardware-based artificial neural network, wherein the hardware-based artificial neural network is preferably formed in an integrated circuit, further preferably in a field programable gate array or in an application-specific integrated circuit.

6. An apparatus according to any one of the preceding claims, wherein the apparatus comprises a shielding device (14, 36) for shielding external disturbance signals which are of the same type of at least one disturbance signal, wherein the shielding device surrounds the hardware-based artificial neural network, the coupling device and the disturbance device.

7. The arrangement of a plurality of devices according to any of the preceding claims, wherein the hardware-based artificial neural networks of the devices are electrically connected to each other in series and/or parallel, wherein preferably the disturbance devices of at least one first device of the plurality of devices and of a second device of the plurality of devices are formed as a common disturbance device, wherein furthermore preferably an output plane of the hardware-based artificial neural network of a third device of the plurality of devices is formed to control the disturbance device of a fourth device of the plurality of devices.

8. A system comprising a plurality of arrangements according to claim 7, wherein a first arrangement of the plurality of arrangements for controlling at least one disturbance device is formed in a second arrangement of the plurality of arrangements.

9. A method for training a hardware-based artificial neural network in a device according to any one of claims 1 to 6, wherein the method (180) comprises at least the following steps:
- defining (181) target output data when processing provided training data;
- feeding (182) the training data into the hardware-based artificial neural network and coupling at least one disturbance signal into at least one area of the hardware-based artificial neural network by means of at least one disturbance device;
- determining (183) of output data of the hardware-based artificial neural network;
- determining (184) whether there is at least one discrepancy between the output data and the target output data that is outside a predetermined tolerance range;
if the deviation is within the tolerance range:
- termination (185) of the method; and
if the deviation is outside the predetermined tolerance range:
- modifying (186) the hardware-based artificial neural network and preferably changing the at least one disturbance signal and repeat the aforementioned steps 182 to 184,
whereby the plurality of controllable disturbance elements of the disturbance device is controlled in such a way that the disturbance signals form a predefined disturbance signal pattern via the hardware-based artificial neural network, whereby several trainings of the hardware-based artificial neural network with different predefined disturbance signal patterns are carried out one after the other.

10. The method of claim 9, wherein a signal-to-noise ratio of not more than 15 dB, preferably not more than 10 dB, and preferably not more than 0 dB is generated by means of the coupled disturbance signal in at least one region.

11. The method of claim 9 or 10, wherein before the step: defining target output data in the processing of provided training data the hardware-based artificial neural network is trained without coupling disturbance signals (187).

12. A method for training hardware-based artificial neural networks in an arrangement according to claim 7, wherein the method (188) for training a hardware-based artificial neural network in a device according to any one of claims 9 to 11 is applied to the hardware-based artificial neural networks of the devices, preferably after the devices have been trained separately outside the arrangement by means of method (180) according to one of claims 10 to 13.

13. A method (189) for training hardware-based neural networks in a system according to claim 8, wherein the method (180) for training a hardware-based artificial neural network in a device according to any one of claims 9 to 11 is applied to the hardware-based artificial neural networks of the devices, preferably after the arrangements have been trained separately outside of the system by means of method (188) for training hardware-based artificial neural networks in an arrangement according to claim 12.

## Revendications

1. Dispositif pour faire fonctionner un réseau neuronal artificiel matériel, comprenant au moins un réseau neuronal artificiel matériel (11, 24, 32, 41, 51, 71, 81, 101, 111, 121, 131, 171) dans lequel le dispositif comprend au moins un dispositif de brouillage (12, 22, 35, 42, 52a, 52b, 72, 82, 102, 112, 122, 132, 172) pour coupler au moins un signal d'interférence dans au moins une région du réseau neuronal artificiel matériel et au moins un dispositif de couplage (15, 23, 34, 43, 53a, 53b, 73, 83, 103, 113, 123, 133, 173), dans lequel le dispositif de couplage est situé entre le dispositif de brouillage et le réseau neuronal artificiel basé sur le matériel et est conçu pour transmettre au moins un signal d'interférence du dispositif de brouillage à l'ensemble de la ou des zones réseau neuronal, où les éléments interférents couplent un signal de brouillage dans différentes zones du réseau neuronal artificiel basé sur le matériel.

2. Dispositif selon la revendication 1, dans lequel le réseau neuronal artificiel basé sur le matériel dans lequel au moins une région a au moins un composant conçu pour réduire le rapport signal/bruit lors de la réception d'au moins un signal d'interférence, dans lequel le dispositif brouilleur génère de préférence un signal d'interférence optique, acoustique, capacitif, électromagnétique, mécanique quantique, résistif, thermique et/ou ionisant.

3. Dispositif selon la revendication 1 ou 2, dans lequel la pluralité des éléments brouilleurs est distribuée sur un plan, de préférence semblable à un tableau, dans lequel le moyen de couplage a un milieu ayant une pluralité d'éléments de couplage (73a, 83a, 103a, 113a) pour transmettre au moins un signal d'interférence à au moins une région, dans lequel les éléments de couplage sont répartis dans le plan comme les éléments brouilleurs.

4. Dispositif selon l'une quelconque des revendications 1 à 3, dans lequel au moins une région a une étendue égale à la taille du réseau neuronal artificiel basé sur le matériel ou est plus petite que la taille du réseau de neurones artificiels basé sur le matériel.

5. Dispositif selon l'une quelconque des revendications précédentes, dans lequel l'appareil comprend au moins une puce semi-conductrice, dans lequel la puce semi-conductrice comprend le réseau neuronal artificiel basé sur le matériel, dans lequel le réseau neuronal artificiel basé sur le matériel est de préférence formé dans un circuit intégré, en outre de préférence dans un réseau de portes programmables sur le terrain ou dans un circuit intégré spécifique à l'application.

6. Dispositif selon l'une quelconque des revendications précédentes, dans lequel l'appareil comprend un dispositif de blindage (14, 36) pour protéger des signaux d'interférence externes qui sont du même type qu'au moins un signal d'interférence, dans lequel le dispositif de blindage entoure le réseau neuronal artificiel basé sur du matériel, le dispositif de couplage et le dispositif d'interférence.

7. Arrangement d'une pluralité de dispositifs selon l'une quelconque des revendications précédentes, dans lequel les réseaux neuronaux artificiels basés sur le matériel des dispositifs sont électriquement connectés les uns aux autres en série et/ou en parallèle, dans lequel de préférence les dispositifs de brouillage d'au moins un premier dispositif de la pluralité de dispositifs et d'un second dispositif de la pluralité de dispositifs sont formés comme un dispositif d'interférence commun, dans lequel en outre de préférence un plan de sortie du réseau de neurones artificiels basé sur le matériel, un troisième dispositif, la multitude de dispositifs pour contrôler le dispositif de brouillage, un quatrième dispositif, la pluralité des dispositifs.

8. Système comprenant une pluralité d'arrangement s selon la revendication 7, dans lequel un premier arrangement de la pluralité d'arrangements pour commander au moins un dispositif d'interférence est formé dans un second arrangement de la pluralité d'arrangements.

9. Méthode d'entraînement d'un réseau neuronal artificiel basé sur du matériel dans un dispositif selon l'une quelconque des revendications 1 à 6, dans lequel le procédé (180) comprend au moins les étapes suivantes:
- définir (181) les données de sortie cibles lors du traitement des données d'entraînement fournies;
- introduire (182) des données d'entraînement dans le réseau neuronal artificiel basé sur le matériel et le couplage d'au moins un signal d'interférence dans au moins une zone du réseau de neurones artificiels basé sur le matériel au moyen d'au moyen d'au moins un dispositif de brouillage ;
- déterminer (183) des données de sortie du réseau de neurones artificiels basé sur le matériel ;
- déterminer (184) s'il existe au moins un écart entre les données de sortie et les données de sortie cible qui se trouve en dehors d'une plage de tolérance prédéterminée ;
si l'écart se situe dans la plage de tolérance :
- quitter (185) la méthode; et
si l'écart est en dehors de la plage de tolérance prédéterminée:
- modifier (186) le réseau neuronal artificiel basé sur le matériel et, de préférence, changer le ou les signaux d'interférence et répéter les étapes 182 à 184 susmentionnées,
Dans lequel la multitude d'éléments d'interférence contrôlables du dispositif de brouillage du dispositif est contrôlée de telle sorte que les signaux d'interférence forment un modèle de signal d'interférence prédéfini via le réseau neuronal artificiel basé sur le matériel, dans lequel plusieurs entraînements du réseau neuronal artificiel basé sur le matériel avec différents modèles de signal d'interférence prédéfinis sont effectués l'un après l'autre.

10. Méthode selon la revendication 9, dans lequel un rapport signal/bruit ne dépassant pas 15 dB, de préférence ne dépassant pas 10 dB et de préférence ne dépassant pas 0 dB est généré au moyen du signal brouillé couplé dans au moins une région.

11. Méthode selon la revendication 9 ou 10, dans lequel le réseau neuronal artificiel basé sur du matériel est entraîné sans couplage de signaux d'interférence (187) avant l'étape : Définition des données de sortie cible dans le traitement des données d'entraînement fournies.

12. Méthode d'entraînement de réseaux neuronaux artificiels basés sur du matériel dans un arrangement selon la revendication 7, dans lequel le procédé (188) d'entraînement d'un réseau neuronal artificiel basé sur du matériel dans un dispositif selon l'une quelconque des revendications 9 à 11 est appliqué aux réseaux neuronaux artificiels basés sur le matériel des dispositifs, de préférence après que les dispositifs ont été placés en dehors de l'arrangement au moyen du procédé (180) selon l'une des revendications 10 à 13 ont été formés séparément.

13. Méthode (189) d'entraînement de réseaux neuronaux basés sur du matériel dans un système selon la revendication 8, dans lequel le procédé (180) d'entraînement d'un réseau neuronal artificiel basé sur du matériel dans un dispositif selon l'une quelconque des revendications 9 à 11 est appliqué aux réseaux neuronaux artificiels basés sur le matériel des dispositifs, de préférence après les arrangements à l'extérieur du système au moyen du procédé (188) pour l'entraînement de réseaux neuronaux artificiels basés sur du matériel réseaux neuronaux dans un agencement selon la revendication 12.
